(19) Europäisches Patentamt
European Patent Office
Office européen des brevets

(11) EP 3 407 031 A1

(12) EUROPEAN PATENT APPLICATION

(43) Date of publication:
**28.11.2018 Bulletin 2018/48**

(21) Application number: **18172878.3**

(22) Date of filing: **17.05.2018**

(51) Int Cl.:
***G01H 1/00** (2006.01)*
***G01H 3/00** (2006.01)*
*G01H 3/12 (2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.05.2017 JP 2017101111**

(71) Applicant: **Toshiba TEC Kabushiki Kaisha**
**Tokyo 141-8562 (JP)**

(72) Inventor: **MATSUSHITA, Naohiro**
**Tokyo, 141-8562 (JP)**

(74) Representative: **Hoffmann Eitle**
**Patent- und Rechtsanwälte PartmbB**
**Arabellastraße 30**
**81925 München (DE)**

# (54) READER DEVICE, SENSOR DEVICE AND SENSING SYSTEM

(57) A reader device includes a reception unit and a control unit. The reception unit receives sensor data transmitted from a sensor device. The control unit detects an abnormal sound from input sound data. When the control unit detects the abnormal sound, the control unit detects the sensor data including vibration data indicating a correlation with the sound data from which the abnormal sound is detected among the sensor data received by the reception unit. The control unit estimates a three-dimensional position of the sensor device of a transmission source of the detected sensor data.

*FIG. 1*

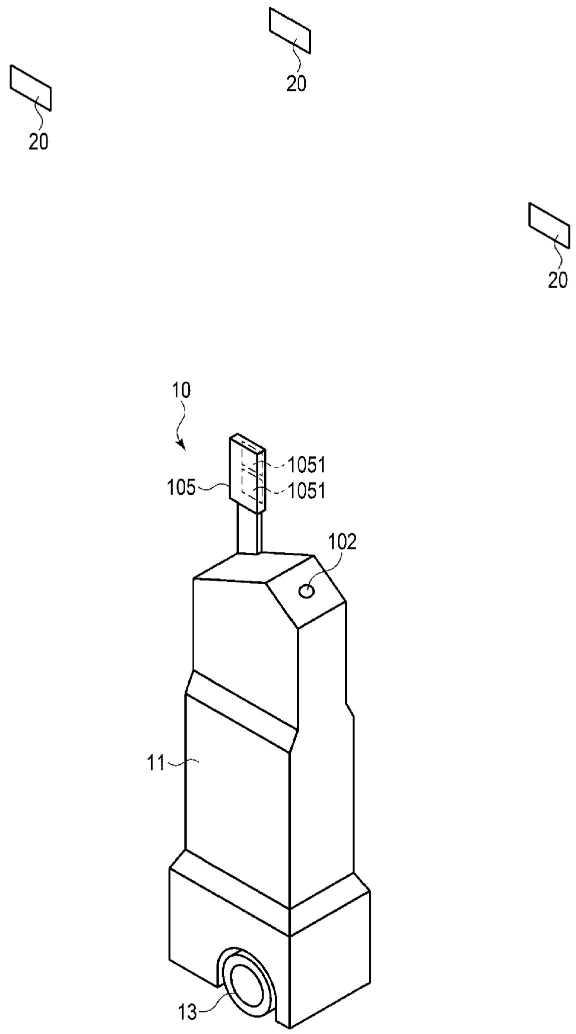


EP 3 407 031 A1

## Description

CROSS-REFERENCE TO RELATED APPLICATION

This application is based upon and claims the benefit of priority from Japanese Patent Application No. P2017-101111, filed May 22, 2017, the entire contents of which are incorporated herein by reference.

FIELD

Embodiments described herein relate generally to a reader device, a sensor device, and a sensing system.

BACKGROUND

In the facilities such as substations, when a maintenance inspection or the like is performed on equipment, and a device such as a power transmission equipment, a person in charge of the maintenance inspection or the like listens to a sound, checks whether or not an abnormal sound occurs, and discovers abnormality of the equipment, the device, or the like. However, since discovering abnormality by listening to the sound as described above requires skill, there is a problem that it is costly to secure and develop human resources. In addition, even though the abnormal sound is recognized, it may take time to specify the location of a source of occurrence of the abnormal sound.

Instead of a person, a sensing system that discovers abnormality of equipment, a device, or the like in a facility using a sensor installed in advance may be used. However, in a case such a sensing system is used, in order to specify an occurrence position of the abnormality, it is necessary to accurately install the sensor at a predetermined position by preparing a drawing or the like recording the position where the sensor is to be installed. Alternatively, after the sensors are installed, it is necessary to accurately record all positions where the sensors are installed using a drawing or the like. In addition, unless all of the installation positions of such sensors are input to a computer, it is not possible to automatically specify the position. As described above, it takes labor and time to determine the position of the sensor and install the sensor. In addition, the lifetime (useful life) of the sensor is shorter than the lifetime (useful life) of the facility, the equipment, or the like in many cases. Therefore, it is necessary to replace the sensor with a new sensor (hereinafter, referred to as "sensor renewal") in many cases. In addition, it takes labor and time as described above for each renewal of such a sensor. In addition, at this time, in a case where the new sensor may not be reinstalled at a correct position according to the drawing, the accuracy of specifying the abnormality occurrence position is reduced. In addition, in a case where the installation position of the sensor deviates whenever the update of the sensor is repeated, the accuracy of specifying the abnormality occurrence position is reduced more and more.

SUMMARY

One of the objects of the present invention is to improve prior art techniques and overcome at least some of the prior art problems as for instance above illustrated.

According to a first aspect of the present invention, it is provided a reader device comprising:

> a reception unit configured to receive sensor data transmitted from a sensor device; and
> a control unit configured to detect an abnormal sound from input sound data,
> wherein, when the control unit detects the abnormal sound, the control unit detects the sensor data including vibration data indicating a correlation with the sound data from which the abnormal sound is detected among the sensor data received by the reception unit, and
> the control unit estimates a three-dimensional position of the sensor device of a transmission source of the detected sensor data.

Optionally, in the first aspect of the invention, the control unit estimates the three-dimensional position of the sensor device based on a current position and a reception intensity of the sensor data transmitted from the sensor device and received by the reception unit.

Optionally, in the reader device according to the first aspect, the control unit further cooperates with a server to perform a process.

According to a second aspect of the invention, it is provided a sensing system comprising:

> a reader device; and
> a sensor device including a vibration sensor,
> wherein the reader device includes
>
> > a reception unit configured to receive sensor data transmitted from the sensor device, and
> > a control unit configured to detect an abnormal sound from input sound data,
>
> wherein when the control unit detects the abnormal sound, the control unit detects the sensor data including vibration data indicating a correlation with the sound data from which the abnormal sound is detected among the sensor data received by the reception unit, and
> the control unit estimates a three-dimensional position of the sensor device of a transmission source of the detected sensor data, and
> the sensor device includes a transmission unit configured to transmit the sensor data including the vibration data measured by the vibration sensor.

According to a third aspect of the invention, it is provided a sensor device configuring a sensing system together with a reader device including a reception unit configured to receive sensor data transmitted from the sensor device, and a control unit configured to detect an abnormal sound from input sound data, the sensor device comprising:

a vibration sensor; and
a transmission unit configured to transmit data including vibration data measured by the vibration sensor,

wherein, when the control unit detects the abnormal sound, the control unit detects the sensor data including the vibration data indicating a correlation with the sound data from which the abnormal sound is detected among the sensor data received by the reception unit, and
the control unit estimates a three-dimensional position of the sensor device of a transmission source of the detected sensor data.

DESCRIPTION OF THE DRAWINGS

FIG. 1 is a diagram illustrating an outline of a sensing system according to a first embodiment.
FIG. 2 is a block diagram illustrating a main circuit configuration of a reader device.
FIG. 3 is a block diagram illustrating a main circuit configuration of a sensor device.
FIG. 4 is a flowchart illustrating a control process by a processor.
FIG. 5 is a flowchart illustrating the control process by the processor.
FIG. 6 is a flowchart illustrating a control process by a processor.
FIG. 7 is a diagram illustrating a positional relationship between the reader device and the sensor device.
FIG. 8 is a diagram illustrating an example of elevation or depression angle-RSSI characteristic when a direction of a directivity of a reader antenna is changed to an elevation or depression angle.
FIG. 9 is a diagram illustrating a positional relationship between the reader device and the sensor device on a horizontal plane.
FIG. 10 is a diagram illustrating an example of position difference-RSSI characteristic from a front when the reader device reciprocates a predetermined distance.
FIG. 11 is a perspective view illustrating the positional relationship between the reader device and the sensor device.
FIG. 12 is a block diagram illustrating a main circuit configuration of a reader device and a server according to a second embodiment.
FIG. 13 is a flowchart illustrating a control process by a processor included in the reader device.
FIG. 14 is a flowchart illustrating a control process by a processor included in the server.

DETAILED DESCRIPTION

An object to be solved by an embodiment of the invention is to provide a reader device, a sensor device, and a sensing system for detecting an abnormality in a facility using a sound. In addition, an object to be solved by an embodiment of the invention is to provide a reader device, a sensor device, and a sensing system capable of reducing labor, time, and the like in installing a sensor.

According to one embodiment, a reader device includes a reception unit and a control unit. The reception unit receives sensor data transmitted from a sensor device. The control unit detects an abnormal sound from input sound data. When the control unit detects the abnormal sound, the control unit detects the sensor data including vibration data indicating a correlation with the sound data from which the abnormal sound is detected among the sensor data received by the reception unit. The control unit estimates a three-dimensional position of the sensor device of a transmission source of the detected sensor data.

Hereinafter, a sensing system according to some embodiments will be described with reference to the drawings.

(First Embodiment)

FIG. 1 is a diagram illustrating an outline of a sensing system 1 according to First Embodiment. The sensing system 1 is a system that performs inspection. The sensing system 1 is used in a power plant, a substation, a factory, a building, a transport facility, or other facilities. Alternatively, the sensing system 1 may be used in a vehicle such as a ship or an aircraft. The sensing system 1 includes a reader device 10 and a plurality of sensor devices 20.

The reader device 10 has a function of automatically checking whether an abnormal sound occurs by self-propelling in a facility or the like by an autopilot. In addition, the reader device 10 has a function of communicating with the sensor device 20. In addition, the reader device 10 has a function of estimating the position of the sensor device 20. For example, the position of the sensor device 20 is expressed by three-dimensional coordinates in a three-dimensional orthogonal system formed from an x-axis, a y-axis, and a z-axis and having a reference point as an origin. In addition, although only one reader device 10 is shown in FIG. 1, a plurality of reader devices 10 may be provided. When the plurality of reader devices 10 are provided, for example, the plurality of reader devices 10 self-propels in different ranges, respectively, and thus the time taken for the inspection is shortened. The reader device 10 will be further described with reference to FIG. 2. FIG. 2 is a block diagram illustrating a main circuit configuration of the reader device 10. The reader device 10 includes a computer 101, a microphone 102, an amplifier 103, an Analog-to-Digital (A/D) converter 104, a reader antenna 105, a Radio Frequency IDentifier (RFID) reader 106, a directivity control unit 107, a position sensor 108, an electric carriage 109, a battery 110, and a power source device 111.

The computer 101 performs a process such as a calculation and a control necessary in an operation of the reader device. The computer 101 includes a processor 1011, a Read-Only Memory (ROM) 1012, a Random-Access Memory (RAM) 1013, an auxiliary storage device 1014, and a bus 1015. The computer 101 is an example of a control unit.

The processor 1011 corresponds to the central portion of the computer 101. The processor 1011 controls each unit to realize various functions of the computer 101 based on a program such as system software, application software, or firmware stored in the ROM 1012 or the auxiliary storage device 1014. For example, the processor 1011 is a Central Processing Unit (CPU), a Micro Processing Unit (MPU), a System on a Chip (SoC), a Digital Signal Processor (DSP), a Graphics Processing Unit (GPU), or the like. Alternatively, the processor 1011 is a combination thereof.

The ROM 1012 corresponds to a main storage portion of the computer 101. The ROM 1012 is a nonvolatile memory mainly used in reading data. The ROM 1012 stores the above-described program. In addition, the ROM 1012 stores data, various setting values, or the like used in performing various processes by the processor 1011.

The RAM 1013 corresponds to a main storage portion of the computer 101. The RAM 1013 is a memory used in reading data. The RAM 1013 stores data temporarily used in performing various processes by the processor 1011, and is used as a so-called work area or the like.

The auxiliary storage device 1014 corresponds to an auxiliary storage portion of the computer 101. For example, the auxiliary storage device 1014 is an Electric Erasable Programmable Read-Only Memory (EEPROM), a Hard Disk Drive (HDD), a Solid State Drive (SSD), or the like. The auxiliary storage device 1014 stores the above-described program in some cases. In addition, the auxiliary storage device 1014 stores the data used in performing the various processes by the processor 1011, data generated by the process in the processor 1011, various setting values, or the like. In addition, instead of the auxiliary storage device 1014 or in addition to the auxiliary storage device 1014, the computer 101 may include an interface capable of inserting a storage medium such as a memory card or a Universal Serial Bus (USB) memory.

In addition, the auxiliary storage device 1014 stores reception signal strength (Received Signal Strength Indication (RSSI) - data indicating distance characteristic (hereinafter, referred to as "RSSI characteristic data")) of a radio wave radiated by the sensor device 20. By using the RSSI characteristic data, if the RSSI is known, the distance from the reader antenna 105 to the sensor device 20 may be known. For example, the RSSI characteristic data may be obtained by measuring the RSSI for each distance while varying the distance between the reader device 10 and the sensor device 20 in a free space.

In addition, the auxiliary storage device 1014 stores the height z1 from the ground of the position where the reader antenna 105 is installed.

The program stored in the ROM 1012 or the auxiliary storage device 1014 includes a control program describing a control process that will be described later. As an example, the reader device 10 is transferred to a manager or the like of the reader device 10 in a state in which the control program is stored in the ROM 1012 or the auxiliary storage device 1014. However, the reader device 10 may be transferred to the manager or the like in a state in which the control program describing the control process that will be described later is not stored in the ROM 1012 or the auxiliary storage device 1014. In addition, the reader device 10 may be transferred to the manager or the like in a state in which another control program is stored in the ROM 1012 or the auxiliary storage device 1014. In addition, the control program describing the control process that will be described later may be separately transferred to the manager or the like and may be written into the ROM 1012 or the auxiliary storage device 1014 under a control of the manager, a service man, or the like. The transferal of the control program at this time may be realized by recording the control program on a removable recording medium such as a magnetic disk, a magneto optical disk, an optical disk, a semiconductor memory, or the like, or downloading the control program through a network.

The bus 1015 includes a control bus, an address bus, a data bus, and the like, and transmits a signal transmitted and received by each unit of the computer 101.

The microphone 102 picks up an ambient sound. That is, the microphone 102 receives a sound and converts the sound into an electric signal. In addition, the microphone 102 outputs the electric signal. As an example, the microphone 102 is a condenser type microphone having a flat frequency characteristic in 20 Hz to 200 KHz in non-directivity and a sensitivity of about 1 V/Pa (1 kHz). The microphone 102 is provided on a head top portion of a main body 11 of the reader device 10 as shown in FIG. 1 so as not to bias the directivity.

The amplifier 103 amplifies the electric signal output from the microphone 102. As an example, the amplifier 103 is an amplifier of a low distortion factor (for example, total harmonic distortion 3% or less in 1 kHz) in a low noise (for example, an effective value of self-noise of 6 $\mu$V or less) .

The A/D converter 104 converts the electric signal amplified by the amplifier 103 from an analog signal into a digital signal. In addition, the A/D converter 104 inputs the digital signal to the computer 101. In addition, hereinafter, the digital signal is referred to as "sound data". As an example, the A/D converter 104 is 12 bits or more.

As an example, the reader antenna 105 is a phased array antenna including two planar antenna elements 1051 arranged in the vertical direction (height direction) . As shown in FIG. 1, the reader antenna 105 is installed in an upper portion of a column 12 installed in an upper portion of the main body 11 of the reader device 10. This is for increasing the height of the position where the reader antenna 105 is positioned. In addition, the reader antenna 105 may be directly installed on the main body 11 of the reader device 10 not on the column 12. The reader antenna 105 is an example of a reception unit that receives sensor data transmitted by the sensor device.

The RFID reader 106 transmits and receives a radio wave using the reader antenna 105. Therefore, the RFID reader 106 communicates with the sensor device 20 through the reader antenna 105. In addition, the RFID reader 106 has a function of measuring the RSSI of a response signal radiated from the sensor device 20. For example, the RFID reader 106 operates to transmit a radio wave according to the frequency band and the radio wave strength prescribed in the national laws and regulations. Therefore, as an example, the RFID reader 106 operates so that the maximum gain combined with the reader antenna 105 and the directivity control unit 107 is 6 dBi and the Equivalent Isotropic Radiated Power (EIRP) does not exceed 4 W in a premises wireless station having transmission power of 1 W in 920 MHz band.

The directivity control unit 107 controls the directivity of the reader antenna 105 based on a control by the processor 1011.

The position sensor 108 is a sensor or the like used in acquiring position information and azimuth information indicating the current position of the reader device 10 by the processor 1011. For example, the position of the reader device 10 is expressed by coordinates with a predetermined reference point as the origin. For example, the azimuth of the reader device 10 is expressed by degrees inclined clockwise in a setting in which a positive direction of the x-axis in the coordinates is zero degrees. The position sensor 108 may be a sensor group including a plurality of sensors or the like.

The electric carriage 109 is provided for allowing the reader device 10 to self-propel. For example, the electric carriage 109 includes a motor and a wheel 13 powered by the motor.

The battery 110 stores electric power necessary in operating the reader device 10.

The power source device 111 stabilizes the electric power stored in the battery 110 and supplies the electric power to each unit of the reader device 10.

The sensor device 20 includes a vibration sensor and is installed in a measurement object such as a facility for the purpose of measuring vibration as a physical amount. For example, the measurement object is various facilities, various devices, various pipes, or the like, however, the measurement object is not limited thereto. The sensor device 20 includes a passive RFID tag. The sensor device 20 may transmit the data measured by the vibration sensor using the RFID tag. In addition, a sensor ID that is a unique ID (identifier) is assigned to each of the plurality of sensor devices 20. The sensor device 20 will be described with reference to FIG. 3. FIG. 3 is a block diagram illustrating a main circuit configuration of the sensor device 20. The sensor device 20 includes a processor 201, a ROM 202, a RAM 203, an RFID antenna 204, an RFID chip 205, a vibration sensor 206, an A/D converter 207, a rectifier circuit 208, a stabilization power source circuit 209, and a capacitor 210.

The processor 201 corresponds to the central portion of the computer that performs a process such as a calculation and a control necessary in an operation of the sensor device 20. The processor 201 controls each unit to realize various functions of the sensor device 20 based on a program such as system software, application software, or firmware stored in the ROM 202 or the like. For example, the processor 201 is a CPU, an MPU, an SoC, a DSP, a GPU, or the like. Alternatively, the processor 201 is a combination thereof. In addition, the processor 201 is connected to the RFID chip 205.

The ROM 202 corresponds to a main storage portion of the computer centered on the processor 201. The ROM 202 is a nonvolatile memory used in reading dedicated data. The ROM 202 stores the above-described program. In addition, the ROM 202 stores data, various setting values, or the like used in performing various processes by the processor 201. In addition, the ROM 202 stores the sensor ID.

The RAM 203 corresponds to a main storage portion of the computer centered on the processor 201. The RAM 203 is a memory used in reading data. The RAM 203 stores data temporarily used in performing various processes by the processor 201, and is used as a so-called work area or the like.

The program stored in the ROM 202 includes a control program describing a control process that will be described later. As an example, the sensor device 20 is transferred to a manager or the like of the sensor device 20 in a state in which the control program is stored in the ROM 202. However, the sensor device 20 may be transferred to the manager or the like in a state in which the control program describing the control process that will be described is not stored in the ROM 202. In addition, the sensor device 20 may be transferred to the manager or the like in a state in which another control program is stored in the ROM 202. In addition, the control program describing the control process that will be described later may be separately transferred to the manager or the like and may be written into the ROM 202 under a control of the manager, a service man, or the like. The transferal of the control program at this time may be realized by recording the control program on a removable recording medium such as a magnetic disk, a magneto optical disk, an optical disk, a semiconductor memory, or the like, or downloading the control program through a network.

The RFID antenna 204 is an antenna configuring an RFID tag. The RFID antenna 204 receives a radio wave transmitted from the reader device 10. In addition, the RFID antenna 204 reflects and radiates a part of the received radio wave. The RFID antenna 204 is an example of a transmission unit that transmits sensor data.

The RFID chip 205 is an Integrated Circuit (IC) chip configuring an RFID tag. The RFID chip 205 operates using a part of the radio wave received by the RFID antenna 204 as a power source. In addition, the RFID chip 205 modulates the radio wave received by the RFID antenna 204 so that information may be transmitted using a reflection wave as a carrier wave. The information includes the sensor ID stored in the ROM 202. The information is an example of sensor data. The reflection wave through which the information is transmitted is radiated by the RFID antenna 204. The RFID chip 205 is connected to the processor 201.

The vibration sensor 206 measures the vibration of a measurement object as a physical amount. In addition, the vibration sensor 206 outputs measurement data. For example, the vibration sensor 206 is a three-axis acceleration sensor that measures the acceleration of a vibration. Alternatively, the vibration sensor 206 may be a six-axis acceleration sensor or the like. Alternatively, the vibration sensor 206 may be any other sensors that measure a displacement by a vibration, a vibration speed, or the like. The vibration sensor 206 is preferably a Micro-ElectroMechanical Systems (MEMS). The MEMS sensor is long lasting, compact, and lightweight.

The A/D converter 207 converts the measurement data output from the vibration sensor 206 from an analog signal into a digital signal. In addition, the A/D converter 207 inputs the converted digital signal to the processor 201.

The rectifier circuit 208 rectifies a part of the radio wave received by the RFID antenna 204 into a direct current voltage.

The stabilization power source circuit 209 stabilizes the direct current voltage rectified by the rectifier circuit 208 by smoothing the direct current voltage.

The voltage rectified and stabilized by the rectifier circuit 208 and the stabilization power source circuit 209 is applied to the capacitor 210, and thus the capacitor 210 is charged.

In addition, the stabilization power source circuit 209 stabilizes the voltage of the capacitor 210 to a desired voltage. The voltage stabilized by the stabilization power source circuit 209 is supplied to each unit of the sensor device 20, such as the processor 201, the vibration sensor 206, the A/D converter 207, and the like.

Hereinafter, an operation of the sensing system 1 according to First Embodiment will be described with reference to FIGs. 4 to 10. In addition, contents of a process in the following operation description are only one example, and various processes capable of obtaining the same result may be appropriately used. FIG. 4 and FIG. 5 are flowcharts illustrating a control process by the processor 1011 of the reader device 10. The processor 1011 executes the control process based on the control program stored in the ROM 1012, the auxiliary storage device 1014, or the like. FIG. 6 is a flowchart illustrating a control process by the processor 201 of the sensor device 20. The processor 201 executes the control process based on the control program stored in the ROM 202 or the like.

In Act1 of FIG. 4, the computer 101 of the reader device 10 waits until a condition for starting the inspection is satisfied. When the condition for starting the inspection is satisfied, the computer 101 makes a determination of Yes in Act1 and proceeds to Act2. For example, the condition for starting the inspection is a predetermined date and time. Alternatively, for example, the condition for starting the inspection is a certain time has elapsed from a previous inspection.

In Act2, the processor 1011 controls the electric carriage 109 so as to start a movement. In addition, the processor 1011 controls the electric carriage 109 so as to move the electric carriage 109 according to a predetermined route. That is, for example, the reader device 10 reads a marker such as an induction tape, a barcode, or the like displayed on the ground in advance by a sensor and moves according to a route indicated by the marker. Alternatively, for example, the reader device 10 moves a predetermined route while measuring the distance to the surrounding object using a laser range scanner or the like. The electric carriage 109 drives the wheel 13 based on the control of the processor 1011.

In Act3, the processor 1011 waits until the processor 1011 arrives at a measurement point. For example, when the processor 1011 reads a marker indicating the measurement point, the processor 1011 determines that the processor 1011 arrives at the measurement point. Alternatively, for example, the processor 1011 acquires position information using the position sensor 108, and when the position information coincides with a coordinate indicating a predetermined measurement point, the processor 1011 determines that the processor 1011 arrives at the measurement point. When the processor 1011 arrives at the measurement point, the processor 1011 makes a determination of Yes in Act 3 and proceeds to Act4.

In Act4, the processor 1011 controls the electric carriage 109 so as to stop the movement. The electric carriage 109 stops driving of the wheel 13 by the control. After the process of Act4, the processor 1011 proceeds to Act5.

In Act5, the processor 1011 acquires the sound data output from the A/D converter 104. After the process of Act5, the process 1011 proceeds to Act6.

In Act6, the processor 1011 determines whether or not the abnormal sound is included in the sound data acquired in Act5. For example, the processor 1011 detects the abnormal sound as follows. That is, the processor 1011 compares the sound data acquired in Act5 with sound data acquired at the same point in the past and calculates an evaluation value indicating the magnitude of a difference between the sound data acquired in Act5 and the sound data acquired at the same point in the past. Specifically, for example, the processor 1011 converts two sound data waveforms that are time axis data into frequency axis data by a Fast Fourier Transform (FFT) or the like, and calculates a difference between both spectrum distributions. In addition, when the evaluation value is equal to or greater than a predetermined threshold value, the processor 1011 determines that the abnormal sound is included in the sound data. In addition, for example, the sound data acquired in the past that is used in the process of Act6 may be obtained by storing the sound data at the measurement point in advance the same as an examination time before an initial inspection is performed. When the abnormal sound is detected, the processor 1011 makes a determination of Yes in Act6 and proceeds to Act7.

As described above, the computer 101 operates as a control unit and a detection unit that detects the abnormal sound by executing the process of Act6.

In Act7, the processor 1011 controls the RFID reader 106 to acquire the vibration data from the sensor device 20 installed in the vicinity. The RFID reader 106 radiates an inquiry signal to the vicinity from the reader antenna 105 based on the control by the processor 1011. The inquiry signal is received by the RFID antenna 204 of the sensor device 20. The sensor device 20 receiving the inquiry signal starts an operation using the inquiry signal as an electric power source. In addition, the processor 201 starts a control process shown in FIG. 6.

In Act31 of FIG. 6, the processor 201 of the sensor device 20 waits until the capacitor 210 is sufficiently charged. When the capacitor 210 is sufficiently charged, the processor 201 makes a determination of Yes in Act31 and proceeds to Act32.

In Act32, the processor 201 instructs the vibration sensor 206 so that the vibration sensor 206 starts the measurement. The vibration sensor 206 receives the instruction and the vibration sensor 206 starts the measurement of the vibration. In addition, the vibration sensor 206 outputs measurement data. The output measurement data is converted into a digital signal by the A/D converter 104 and stored in the RAM 203. In addition, for example, the measurement data stored in the RAM 203 is stored as a waveform indicating the measured vibration. Hereinafter, the measurement data stored in the RAM 203 as described above is referred to as "vibration data". After the process of Act32, the processor 201 proceeds to Act33.

In Act33, the processor 201 waits until the vibration data is accumulated in the RAM 203 for a predetermined time. When the vibration data is accumulated in the RAM 203 for the predetermined time, the processor 201 makes a determination of Yes in Act33 and proceeds to Act34.

In Act34, the processor 201 starts a transmission of the vibration data. That is, the processor 201 controls the RFID chip 205 so that the RFID chip 205 modulates the reflection wave such that the reflection wave includes the vibration data stored in the RAM 203. The reflection wave modulated by the RFID chip 205 includes the sensor ID stored in the ROM 202 and the vibration data stored in the RAM 203. The reflection wave modulated as described above is radiated from the RFID antenna 204. The reflection wave modulated before starting the transmission of the vibration data includes the sensor ID stored in the ROM 202 and does not include the vibration data stored in the RAM 203. After the process of Act34, the processor 201 ends the control process shown in FIG. 6.

By the performances described above, the reflection wave radiated by reflecting the inquiry signal is received by the reader antenna 105 of the reader device 10. The received reflection wave is demodulated by the RFID reader 106 and the sensor ID and the vibration data are read. The RFID reader 106 inputs the read sensor ID and vibration data to the processor 1011. By the performances described above, the processor 1011 acquires the vibration data from the sensor device 20. After the process of Act7, the processor 1011 proceeds to Act8.

In Act8, the processor 1011 checks whether vibration data indicating an abnormal vibration is present among the vibration data acquired in Act7. That is, the processor 1011 checks a correlation between the waveform of the vibration data acquired in Act7 and the waveform of the sound data acquired in Act3, and when the correlation is equal to or greater than a predetermined value, the processor 1011 determines that the waveform indicated by the vibration data is a waveform indicating the abnormal vibration. Specifically, for example, the processor 1011 converts the waveform of the vibration data acquired in Act7 and the waveform of the sound data acquired in Act3 into frequency spectrums by FFT or the like to calculate a cross correlation. In addition, when the cross correlation is equal to or greater than a predetermined value, the processor 1011 determines that the waveform indicated by the vibration data is a waveform indicating the abnormal vibration. After the process of Act8, the processor 1011 proceeds to Act9. Therefore, by the performance of the process of Act8, the computer 101 operates as a control unit that detects the sensor data including the vibration data indicating the correlation with the sound data from which the abnormal sound is detected.

In Act9, the processor 1011 determines whether or not the vibration data determined as the vibration data indicating the abnormal vibration in Act8 is present. When the vibration data determined as the vibration data indicating the abnormal vibration in Act8 is present, the processor 1011 makes a determination of Yes in Act9 and proceeds to Act10.

In Act10, the processor 1011 selects the vibration data having the highest correlation in Act8. After the process of Act10, the processor 1011 proceeds to Act11.

In Act11, the processor 1011 performs the coordinate estimation process shown in FIG. 5 using the sensor device 20 that is the transmission source of the vibration data selected in Act9 as a target. In addition, the sensor ID included in the reflection wave is used in identifying the sensor device 20 that is used as the target.

In Act21 of FIG. 5, the processor 1011 controls the directivity control unit 107 so that the directivity control unit 107 performs scanning while changing the direction of the directivity of the reader antenna 105 to an elevation or depression angle (vertical direction) as shown in FIG. 7. FIG. 7 is a diagram illustrating a positional relationship between the reader device 10 and the sensor device 20. A directivity pattern 40 indicates a directivity pattern of a radio wave radiated by the reader antenna 105 on a plane perpendicular to a horizontal plane in a direction perpendicular to the antenna element 1051 of the reader antenna 105. A direction 41 indicates a direction in which a gain is the maximum in the corresponding directivity pattern 40. As an example, the processor 1011 controls the directivity control unit 107 so that the directivity control unit 107 performs scanning in a range where the elevation or depression angle $\Theta$ is $\pm 20$ degrees in the horizontal direction.

According to the control by the processor 1011, the directivity control unit 107 controls the directivity of the reader antenna 105 to radiate the radio wave. The reflection wave is radiated as a response signal from the sensor device 20 receiving the radiated radio wave. The reflection wave is received by the reader antenna 105. The directivity control unit 107 measures the RSSI of the reflection wave received by the reader antenna 105 for each direction of the directivity. The RSSI measured as described above indicates a characteristic as shown in FIG. 8. In this case, since the RSSI is the maximum at the elevation or depression angle $\Theta$=10 degrees, the sensor device 20 is present in the direction of the elevation or depression angle $\Theta$=10 degrees. In addition, due to an environment, a unimodal graph may not be made owing to a reflection of a radio wave by a surrounding object and an influence of an obstacle, and a measurement error may increase owing to large time variation of the RSSI, in some cases. However, the accuracy may be increased by repeating the measurement a plurality of times to obtain an average value. After the process of Act21, the processor 1011 proceeds to Act22.

In Act22, the processor 1011 controls the directivity control unit 107 so that the direction of the directivity of the reader antenna 105 is the direction in which the RSSI is the maximum in Act21. As an example, as a result of the measurement in Act21, when the processor 1011 obtains the RSSI characteristic as shown in FIG. 8, the processor 1011 controls the directivity control unit 107 so that the direction of the directivity of the reader antenna 105 is the elevation or depression angle $\Theta$=10 degrees. The directivity control unit 107 changes the direction of the directivity of the reader antenna 105 based on the control by the processor 1011. Then, after the process of Act22, the processor 1011 proceeds to Act23.

In Act23, the processor 1011 controls each unit of the electric carriage 109 or the like so as to be moved on a straight line as shown in FIG. 9 to search for a position where the RSSI is the maximum on the straight line. FIG. 9 is a diagram illustrating a positional relationship between the reader device 10 and the sensor device 20 on the horizontal plane. In addition, FIG. 9 is a plan view of the reader device 10 and the like as seen from above. FIG. 9 illustrates the reader device 10 at a position A on the straight line and the reader device 10 at a position B on the straight line. A directivity pattern 60 indicates a directivity pattern of a radio wave radiated by the reader antenna 105 on the plane parallel to the horizontal plane and passing through the reader antenna 105.

The reader device 10 moves on the straight line based on the control of the processor 1011. In addition, for example, the straight line is a straight line that coincides with a direction in which the reader device 10 proceeds. In addition, when the reader device 10 moves on the straight line, the processor 1011 radiates the radio wave from the reader antenna 105 and controls the reader antenna 105 and the directivity control unit 107 so as to measure the RSSI for each position of the reader device 10. The reader antenna 105 radiates the radio wave according to the control by the processor 1011. The reflection wave is radiated as the response signal from the sensor device 20 receiving the radio wave radiated from the reader antenna 105. The reflection wave is received by the reader antenna 105. The directivity control unit 107 measures the RSSI of the reflection wave received by the reader antenna 105 under the control of the processor 1011. Since the radio wave radiated from the reader antenna 105 has the directivity pattern 60 as shown in FIG. 9, as an example, the RSSI measured as described above indicates a characteristic for a position difference from the front as shown in FIG. 10. In addition, the position difference from the front is a value indicating the position of the sensor device 20 on the straight line under an assumption that the state in which the sensor device 20 is present in front of the reader antenna 105 is 0 cm and a travelling direction of the reader device 10 is positive. As shown in FIG. 10, since the RSSI is the maximum when the position difference from the front is 0 cm, the position may be specified by measuring the RSSI while the movement is performed as described above. In addition, due to an environment, a unimodal graph may not be made owing to a reflection of a radio wave by a surrounding object and an influence of an obstacle, and a measurement error may increase owing to large time variation of the RSSI, in some cases. However, the accuracy may be increased by repeating the measurement a plurality of times to obtain an average value. After the process of Act23, the processor 1011 proceeds to Act24.

In Act24, the processor 1011 moves the position of the reader device 10 to the position where the RSSI is the maximum, which is specified in Act23. After the process of Act24, the processor 1011 proceeds to Act25.

In Act25, the processor 1011 acquires own position information and own azimuth information using the position sensor 108. It is assumed that the position information acquired at this time is coordinates (x1, y1). In addition, it is assumed that the azimuth information acquired at this time is an angle $\phi$. After the process of Act25, the processor 1011 proceeds to Act26.

In Act26, the processor 1011 performs the same process as Act21 in order to increase the accuracy of the elevation or depression angle $\Theta$. In addition, the processor 1011 stores the elevation or depression angle $\Theta$ at which the RSSI is the maximum in the process in the RAM 1013 or the like. After the process of Act26, the processor 1011 proceeds to Act27.

In Act27, the processor 1011 controls the directivity control unit 107 so that the direction of the directivity of the reader antenna 105 is the elevation or depression angle $\Theta$ stored in Act26. The directivity control unit 107 controls the direction of the directivity of the reader antenna 105 so as to be the elevation or depression angle $\Theta$, based on the control. After the process of Act27, the processor 1011 proceeds to Act28.

In Act28, the processor 1011 measures the RSSI. In addition, the processor 1011 estimates the distance d between the reader antenna 105 and the sensor device 20 from the measured RSSI, based on RSSI characteristic data. After the process of Act28, the processor 1011 proceeds to Act29.

In Act29, the processor 1011 estimates the position of the sensor device 20. The estimation of the position of the sensor device 20 will be described with reference to FIG. 11.

FIG. 11 is a perspective view illustrating a positional relationship between the reader device 10 and the sensor device 20. The processor 1011 estimates position coordinates (x2, y2, z2) of the sensor device 20 from the height z1 of the reader device 105 from the ground stored in the auxiliary storage device 1014, the position information (coordinates (x1, y1) acquired in Act25, the azimuth information (angle $\phi$) acquired in Act25, the elevation or depression angle $\Theta$ stored in Act26, and distance d estimated in Act28. In addition, the elevation or depression angle $\Theta$ and the distance d indicate the relative position of the sensor device 20 from the reader device 10.

As shown in FIG. 11, the relative position between the sensor device 20 and the reader antenna 105 may be indicated by a horizontal distance dh and a z direction distance dz. dh is obtained by the following Expression (1), and dz is obtained by the following Expression (2).

$$dh = d \cdot \cos\Theta \quad \cdots \ (1)$$

$$dz = d \cdot \sin\Theta \quad \cdots \ (2)$$

In addition, the horizontal distance dh may be resolved into the x direction distance dx and the y direction distance dy. dx is obtained by the following Expression (3), and dy is obtained by the following Expression (4).

$$dx = d \cdot \cos\Theta \cdot \sin\phi \quad \cdots \ (3)$$

$$dy = d \cdot \cos\Theta \cdot \cos\phi \quad \cdots \ (4)$$

The position of the reader antenna 105 is coordinates (x1, y1, z1). Therefore, the coordinates (x2, y2, z2) of the sensor device 20 are obtained by the following Expressions (5) to (7).

$$x2 = x1 + dx = x1 + d \cdot \cos\Theta \cdot \sin\phi \quad \cdots \ (5)$$

$$y2 = y1 + dy = y1 + d \cdot \cos\Theta \cdot \cos\phi \quad \cdots \ (6)$$

$$z2 = z1 + dz = z1 + d \cdot \sin\Theta \quad \cdots \ (7)$$

After the process of Act29, the processor 1011 ends the coordinate estimation process and proceeds to Act12. In addition, the sequence in the coordinate estimation process described above is an example, and the processor 1011 may estimate the coordinate by another sequence.

As described above, by the performance of the coordinate estimation process, the computer 101 operates as a control unit that estimates the three-dimensional position of the sensor device.

In Act12, the processor 1011 stores the coordinates (x2, y2, z2) that is the position of the sensor device 20 derived from the coordinate estimation process, in the auxiliary storage device 1014 or the like. After the process of Act12, the processor 1011 proceeds to Act14.

On the other hand, in Act8, when data determined as data indicating the abnormal vibration is absent, the processor 1011 makes a determination of No in Act9 and proceeds to Act13.

In Act13, the processor 1011 acquires and stores the position information of the reader device 10. After the process of Act13, the processor 1011 proceeds to Act14.

In addition, in Act6, when the abnormal sound is not detected, the processor 1011 makes a determination of No in Act6 and proceeds to Act14.

In Act14, the processor 1011 determines whether or not all measurements are completed. When all measurements are not completed, the processor 1011 makes a determination No in Act14 and proceeds to Act2. In addition, in Act2, the reader device 10 starts the movement to the next measurement point. On the other hand, when all measurements are completed, the processor 1011 makes a determination Yes in Act14 and proceeds to Act15.

In Act15, the processor 1011 controls each unit to be moved to a place to wait until the next inspection is started. The reader device 10 moves to the standby place based on the control. After the process of Act15, the processor 1011 returns to Act1.

According to the sensing system 1 of First Embodiment, the reader device 10 detects the abnormal sound using the microphone 102. In addition, when the reader device 10 detects the abnormal sound, the reader device 10 communicates with the sensor device 20 installed in the vicinity of the place in advance to check whether the sensor device 20 detects the abnormal vibration. Therefore, it is possible to know which sensor device 20 is placed in a place where an abnormality occurs.

In addition, the reader device 10 estimates the position of the sensor device 20 detecting the abnormal vibration. Therefore, the reader device 10 may specify three-dimensional coordinates of a place where the abnormality occurs. That is, the reader device 10 not only acquires the measurement data of the sensor device 20 but also performs the position measurement of the sensor device 20. Therefore, in the sensing system 1, it is unnecessary to accurately install the sensor device 20 at a predetermined position and to record the accurate position at which the sensor device 20 is installed. Therefore, installation, renewal, and expansion of the sensor device 20 may be simply performed. In addition, as described above, the sensing system 1 can automatically perform not only the detection of the abnormal sound but also the specification of the abnormality occurrence place.

In addition, according to the sensing system 1 of First Embodiment, the reader device 10 is self-propelled in a facility or the like by an autopilot based on a program and detects whether an abnormal sound occurs, to perform an inspection of the inside of the facility. In addition, the reader device 10 may also set the start time of the inspection and the like. Therefore, the sensing system 1 can automatically perform an inspection in a facility.

In addition, according to the sensing system 1 of First Embodiment, when the sensor device 20 indicating the abnormal vibration is absent although the abnormal sound is detected, the reader device 10 stores the position information of the reader device 10. Therefore, the reader device 10 can detect the abnormality occurrence and approximate position of the abnormality occurrence even when the abnormal sound occurs where the sensor device 20 is not installed, or the like.

(Second Embodiment)

A sensing system 1b according to Second Embodiment will be described with reference to FIG. 12. FIG. 12 is a block diagram illustrating a main circuit configuration of a reader device and a server according to Second Embodiment. In addition, in FIG. 12, the same reference numerals are given to the same elements as those in FIG. 2 according to First Embodiment. In addition, descriptions of elements similar to those in First Embodiment may be omitted. The sensing system 1b according to Second Embodiment includes a server 90 in addition to a reader device 10b and the sensor device 20. The reader device 10b and the server 90 are connected to a network NW. The network NW is a private network such as an intranet or a communication network including the Internet and the like.

The reader device 10b includes a communication interface 121 and a communication antenna 122. The communication interface 121 is an interface through which the processor 1011 communicates with the communication antenna 122.

The communication antenna 122 is an antenna through which the reader device 10 communicates with the network NW.

The server 90 includes a processor 901, a ROM 902, a RAM 903, an auxiliary storage device 904, a communication interface 905, and a bus 906.

The processor 901 corresponds to the central portion of a computer that performs a process such as a calculation and a control necessary in an operation of the server 90. The processor 901 controls each unit to realize various functions of the server 90 based on a program such as system software, application software, or firmware stored in the ROM 902 or the auxiliary storage device 904. For example, the processor 901 is a CPU, an MPU, an SoC, a DSP, a GPU, or the like. Alternatively, the processor 901 is a combination thereof.

The ROM 902 corresponds to a main storage portion of the computer centered on the processor 901. The ROM 902 is a nonvolatile memory used in reading dedicated data. The ROM 902 stores the above-described program. In addition, the ROM 902 stores data, various setting values, or the like used in performing various processes by the processor 901.

The RAM 903 corresponds to a main storage portion of the computer centered on the processor 901. The RAM 903 is a memory used in reading data. The RAM 903 stores data temporarily used in performing various processes by the processor 901, and is used as a so-called work area or the like.

The auxiliary storage device 904 corresponds to an auxiliary storage portion of the computer centered on the processor 901. For example, the auxiliary storage device 904 is an EEPROM, an HDD, an SSD, or the like. The auxiliary storage device 904 stores the above-described program in some cases. In addition, the auxiliary storage device 904 stores the data used in performing the various processes by the processor 901, data generated by the process in the processor 901, various setting values, or the like.

The program stored in the ROM 902 or the auxiliary storage device 904 includes a control program describing a control process that will be later. As an example, the server 90 is transferred to a manager or the like of the server 90 in a state in which the control program is stored in the ROM 902 or the auxiliary storage device 904. However, the server 90 may be transferred to the manager or the like in a state in which the control program describing the control process that will be described later is not stored in the ROM 902 or the auxiliary storage device 904. In addition, the server 90 may be transferred to the manager or the like in a state in which another control program is stored in the ROM 902 or the auxiliary storage device 904. In addition, the control program describing the control process that will be described later may be separately transferred to the manager or the like and may be written into the ROM 902 or the auxiliary storage device 904 under a control of the manager, a service man, or the like. The transferal of the control program at this time may be realized by recording the control program on a removable recording medium such as a magnetic disk, a magneto optical disk, an optical disk, a semiconductor memory, or the like, or downloading the control program through a network.

The communication interface 905 is an interface through which the server 90 performs communication through the network NW or the like.

The bus 906 includes a control bus, an address bus, a data bus, and the like, and transmits a signal transmitted and received by each unit of the server 90.

Hereinafter, an operation of the sensing system 1b according to Second Embodiment will be described with reference to FIGs. 13 and 14. FIG. 13 is a flowchart illustrating a control process by the processor 1011 of the reader device 10. The processor 1011 executes the control process based on the control program stored in the ROM 1012, the auxiliary storage device 1014, or the like. FIG. 14 is a flowchart illustrating a control process by the processor 901 of the server 90. The processor 901 executes the control process based on the control program stored in the ROM 902, the auxiliary storage device 904, or the like. In addition, the contents of the process in the following description are merely an example, and various processes capable of obtaining the same result may be appropriately used. In addition, in FIG. 13, the same reference numerals are given to the same processes as those in FIG. 4 according to First Embodiment. In addition, in the following description of the operation, descriptions of processes similar to those in First Embodiment may be omitted.

After the process of Act5 of FIG. 13, the processor 1011 proceeds to Act41.

In Act41, the processor 1011 instructs the communication interface 121 so that the communication interface 121 transmits the sound data acquired in Act5 to the server 90. The communication interface 121 receiving the instruction transmits the sound data to the server 90. The transmitted sound data is received by the communication interface 905 of the server 90. After the process of Act41, the processor 1011 proceeds to Act42.

On the other hand, in Act51 of FIG. 14, the processor 901 of the server 90 waits until the data is received by the communication interface 905. When the data such as the sound data or the vibration data is received, the processor 901 makes a determination of Yes in Act51 and proceeds to Act52.

In Act 52, the processor 901 determines whether or not the received data is the sound data. When the received data is the sound data, the processor 901 makes a determination of Yes in Act52 and proceeds to Act53.

In Act53, the processor 901 performs the same process as that of Act6, and performs a process of determining whether or not the abnormal sound is included in the received data. After the process of Act53, the processor 901 proceeds to Act54.

In Act54, the processor 901 instructs the communication interface 905 so that the communication interface 905 transmits the process result of Act53 to the reader device 10. The communication interface 905 receiving the instruction transmits the process result to the reader device 10. The transmitted process result is received by the communication interface 121 of the reader device 10. After the process of Act54, the processor 901 returns to Act51.

On the other hand, in Act42 of FIG. 13, the processor 1011 waits until the process result is received by the communication interface 121. When the process result is received, the processor 1011 makes a determination of Yes in Act42 and proceeds to Act43.

In Act43, the processor 1011 determines whether or not the process result received in Act42 is a determination that the abnormal sound is included in the sound. When the determination is not the determination that the abnormal sound is included in the sound, the processor 1011 makes a determination No in Act43 and proceeds to Act14. On the other hand, when the determination is the determination that the abnormal sound is included in the sound, the processor 1011 makes a determination Yes in Act43 and proceeds to Act7. After the process of Act7, the processor 1011 proceeds to Act44.

In Act44, the processor 1011 instructs the communication interface 121 so that the communication interface 121 transmits the vibration data acquired in Act7 to the server 90 together with the sensor ID. The communication interface 121 receiving the instruction transmits the vibration data to the server 90. The received vibration data is received by the communication interface 905 of the server 90. After the process of Act44, the processor 1011 proceeds to Act45.

On the other hand, when the vibration data is received by the communication interface 905, the processor 901 makes a determination Yes in Act51 and No in Act52 and proceeds to Act55.

In Act55, the processor 901 determines whether or not the received data is the vibration data. When the received data is the vibration data, the processor 901 makes a determination Yes in Act55 and proceeds to Act56. In addition, when the received data is not the vibration data, the processor 901 performs other processes according to the received data.

In Act56, the processor 901 performs the same process as those in Acts8 to 10. After the process of Act56, the processor 901 proceeds to Act57.

In Act57, the processor 901 instructs the communication interface 905 so that the communication interface 905 transmits the process result of Act56 to the reader device 10. The communication interface 905 receiving the instruction transmits the process result to the reader device 10. The transmitted process result is received by the communication interface 121 of the reader device 10. After the process of Act54, the processor 901 returns to Act51. In addition, when the vibration data indicating the abnormal vibration is present in the process of Act56, the process result includes information indicating that the vibration data indicating the abnormal vibration is present and a sensor ID corresponding to the vibration data. In addition, when the vibration data indicating the abnormal vibration is absent in the process of Act56, the process result includes information indicating that the vibration data indicating the abnormal vibration is absent.

On the other hand, in Act45 of FIG. 13, the processor 1011 waits until the process result is received by the communication interface 121. When the process result is received, the processor 1011 makes a determination of Yes in Act45 and proceeds to Act46.

In Act46, the processor 1011 determines whether or not information indicating that the vibration data indicating the abnormal vibration is present is included in the process result received in Act45. When the information indicating that the vibration data indicating the abnormal vibration is present is included in the process result, the processor 1011 makes a determination of Yes in Act46 and proceeds to Act47. On the other hand, when the information indicating that the vibration data indicating the abnormal vibration is present is not included in the process result, the processor 1011 makes a determination of No in Act46 and proceeds to Act13.

In Act47, the processor 1011 performs the coordinate estimation process shown in FIG. 5 with respect to the sensor device 20 specified by the sensor ID included in the process result received in Act45. After the process of Act47, the processor 1011 proceeds to Act12.

The sensing system 1b according to Second Embodiment obtains the same effect as that of the sensing system 1 according to First Embodiment.

In the sensing system 1b according to Second Embodiment, the server 90 performs a part of the process contents performed by the computer 101 included in the reader device 10 in First Embodiment. That is, the computer 101 and the server 90 perform the process in cooperation. Especially, the process related to the FFT and the process related to the cross correlation are processes of which loads are heavy. Therefore, since the process capability of the computer 101 included in the reader device 10b according to Second Embodiment may be lower than that of the reader device 10 according to First Embodiment, cost of the reader device 10b can be reduced. Especially, when a large number of the reader devices 10b are operated, cost of the entire sensing system 1b can be largely reduced.

In addition, as described above, since the process capability of the computer 101 included in the reader device 10b may be low, a compact and light computer compared to the reader device 10 according to First Embodiment can be used. Therefore, according to the sensing system 1b of Second Embodiment, it is possible to reduce the size and the weight of the reader device 10b.

First Embodiment and Second Embodiment described above may also be modified as follows.

The reader device 10 may detect the abnormal sound while the reader device 10 is moved without stopping of the reader device 10. In this case, the reader device 10 detects the abnormal sound only when the reader device 10 passes through a measurement point. Alternatively, the reader device 10 always detects the abnormal sound while the reader device 10 is moved without setting the measurement point. When the reader device 10 detects the abnormal sound, the reader device 10 stops the movement at the place where the abnormal sound is detected and performs the process after Act7. The reader device 10 may stop the movement after the reader device 10 searches for a place where the abnormal sound is largely detected rather than stopping the movement immediately after the reader device 10 detects the abnormal sound. Therefore, for example, when the reader device 10 detects the abnormal sound, the reader device 10 continues the movement while measuring the abnormal sound level and continues the movement while the abnormal sound level increases with the movement. Then, the reader device 10 stops the movement when the abnormal sound level is reduced with the movement. At this time, the reader device 10 may stop the movement after the reader device 10 returns to the position where the abnormal sound level is measured as the highest.

In addition, when the reader device 10 detects the abnormal sound moving, the reader device 10 may perform the acquisition of the sensor data and the position estimation of the sensor device 20 without stopping. That is, for example, when the reader device 10 measures the RSSI, the reader device 10 corrects the change of the RSSI by the movement and performs the measurement. Alternatively, for example, the reader device 10 measures the RSSI at a rate at which the change of the RSSI by the movement is not a problem. In addition, the reader device 10 realizes the position estimation of the sensor device 20 while the reader device 10 is moved using the existing radar technology. In addition, the reader device 10 may start the acquisition of the sensor data and the position estimation of the sensor device 20 after searching for a place where the abnormal sound is largely detected as described above.

In estimating the distance d, the time from the transmission of the radio wave to the reception of the reflection wave may be used.

When the reader device 10 detects the abnormal sound after only the detection of the abnormal sound in a facility or the like is all ended, the reader device 10 may return to the place where the abnormal sound is detected and perform the acquisition of the sensor data and the position estimation of the sensor device 20.

The RFID tag is not limited to a passive tag, and may be an active tag or a semi-active tag. In this case, the sensor device 20 may operate as a beacon that periodically transmits data.

The sensor device 20 is not limited to the RFID tag, and may be a transponder using other structures. Alternatively, the sensor device 20 may be a beacon or the like using a structure other than the RFID tag.

The sensor device 20 performs transmission and reception by one RFID tag. However, the sensor device 20 may separately include a communication device for reception and a communication device for transmission.

The reader device 10 and the sensor device 20 may use an electromagnetic wave other than a radio wave, such as visible light or infrared light, in communication between the reader device 10 and the sensor device 20. In addition, the reader device 10 and the sensor device 20 may use a wave other than an electromagnetic wave, such as an ultrasonic wave, in communication between the reader device 10 and the sensor device 20.

The reader antenna 105 may be a phased array antenna in which the antenna element 1051 is disposed not only in the vertical direction but also in the horizontal direction. In this case, in Act23, the processor 1011 may control the directivity control unit 107 so that the directivity control unit 107 performs scanning while changing the direction of the directivity of the reader antenna 105 to the azimuth angle (horizontal direction). By the performance described above, the reader device 10 may specify the horizontal position of the sensor device without the movement of the reader device 10.

The reader antenna 105 is not limited to the phased array antenna, and may be other antennas.

In order to change the direction of the directivity of the reader antenna 105, a method other than changing the phase may be used. For example, the reader device 10 changes a physical direction of the reader antenna 105 installed so as to be rotated or rotatable. Alternatively, the reader antenna 105 installed so as to be moved in at least one of the horizontal direction and the vertical direction is moved.

The reader device 10 may include a plurality of reader antennas 105. In this case, the position of a directivity sensor device may be estimated by comparing reception intensities of the plurality of antennas with each other.

The reader device 10 may acquire position information of the reader device 10 using a method other than the methods described above. For example, the reader device 10 acquires the position information of the reader device 10 using a Global Navigation Satellite System (GNSS) such as a Global Positioning System (GPS), a positioning system using an access point such as an Indoor MEssaging System (IMES), a Dead Reckoning (DR), a Simultaneous Localization And Mapping (SLAM), a Wi-Fi, a positioning system by a beacon using a Bluetooth (registered trademark) Low Energy (BLE) or the like, a positioning system using geomagnetism, a method combining a plurality of such positioning systems, or the like. When the SLAM is used in the position estimation, since the reader device 10 may automatically determine a driving route, labor, time, or the like for setting the driving route of the reader device 10 may be reduced.

The reader device 10 may include a sensor such as a level that measures the inclination of the reader device 10. When the measurement point is not horizontal or the like, the position estimation with higher accuracy is possible in consideration of the inclination angle of the reader device 10.

The reader device 10 and the reader device 10b may estimate the height from a reference point of the reader device 10 and the reader device 10b. In this case, the sensing system of the embodiment may be used even in a place where there is a difference of elevation.

The server 90 and the reader device 10b may communicate with each other without passing through the network NW.

The reader device of the embodiment may not be self-propelled and may be towed by another power car or the like to be moved. Alternatively, the reader device of the embodiment may be moved by human power.

The reader device of the embodiment may not be an autopilot and may be operated by a person. In this case, the reader device of the embodiment may be remotely operated or may be operated in a state in which a person gets on the reader device.

The reader device of the embodiment may move by power other than electric power. For example, the reader device of the embodiment includes an engine-driven carriage instead of the electric carriage 109.

The reader device of the embodiment may move by means other than wheels. For example, the reader device of the embodiment moves by an unlimited orbit, a leg, or the like.

The reader device of the embodiment may be a railway car running on a rail.

The reader device of the embodiment may be an aircraft such as an Unmanned Aerial Vehicle (UAV) . For example, a reader device that is a UAV may be so-called drone or the like flying by a plurality of rotors. In this case, the reader device includes a mechanism for flight such as a rotor instead of the electric carriage 109. A reader device that is an aircraft may be used even a place where a movement on the ground is difficult such as a place there is no driving space and a high place.

The reader device of the embodiment may be a ship such as an Unmanned Surface Vehicle (USV) . In this case, the reader device includes a propelling machine or the like for advancing on water instead of the electric carriage 109. A reader device that is a ship is useful in inspecting a facility installed on water or in water. In addition, when the sensor device is installed in water, using ultrasonic wave or the like is preferable in the communication between the sensor device and the reader device. Since a radio wave largely attenuated in water, using the ultrasonic wave or the like is easy to perform the communication.

The reader device of the embodiment may be a submarine such as an Unmanned Underwater vehicle (UUV). In this case, the reader device includes a propelling device for advancing on water and in water and a diving mechanism for submergence and floating instead of the electric carriage 109. A reader device that is a submarine is useful in inspecting a facility installed in water, water floor, or the like.

The coordinate system indicating the positions of the reader device 10 and the sensor device 20 is not limited to an orthogonal coordinate system. For example, the coordinates indicating the positions of the reader device 10 and the sensor device 20 are coordinates systems including latitude, longitude, altitude, and the like.

In the sensing system 1b, the server 90 may perform the process other than the above-described process instead of the reader device 10b.

The sensing system 1 and the sensing system 1b are not limited to a facility, a vehicle, or the like, and may be used at random places.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

**1.** A reader device comprising:

a reception unit configured to receive sensor data transmitted from a sensor device; and
a control unit configured to detect an abnormal sound from input sound data,

wherein, when the control unit detects the abnormal sound, the control unit detects the sensor data including vibration data indicating a correlation with the sound data from which the abnormal sound is detected among the sensor data received by the reception unit, and
the control unit estimates a three-dimensional position of the sensor device of a transmission source of the detected sensor data.

**2.** The reader device according to claim 1, wherein the control unit estimates the three-dimensional position of the sensor device based on a current position and a reception intensity of the sensor data transmitted from the sensor device and received by the reception unit.

**3.** The reader device according to claim 1 or 2, wherein the control unit cooperates with a server to perform a process.

**4.** A sensing system comprising:

a reader device; and
a sensor device including a vibration sensor,
wherein the reader device includes

a reception unit configured to receive sensor data transmitted from the sensor device, and
a control unit configured to detect an abnormal sound from input sound data,

wherein when the control unit detects the abnormal sound, the control unit detects the sensor data including vibration data indicating a correlation with the sound data from which the abnormal sound is detected among the sensor data received by the reception unit, and
the control unit estimates a three-dimensional position of the sensor device of a transmission source of the detected sensor data, and
the sensor device includes a transmission unit configured to transmit the sensor data including the vibration data measured by the vibration sensor.

**5.** A sensor device configuring a sensing system together with a reader device including a reception unit configured to receive sensor data transmitted from the sensor device, and a control unit configured to detect an abnormal sound from input sound data, the sensor device comprising:

a vibration sensor; and
a transmission unit configured to transmit data including vibration data measured by the vibration sensor,

wherein, when the control unit detects the abnormal sound, the control unit detects the sensor data including the vibration data indicating a correlation with the sound data from which the abnormal sound is detected among the sensor data received by the reception unit, and
the control unit estimates a three-dimensional position of the sensor device of a transmission source of the detected sensor data.

FIG. 1

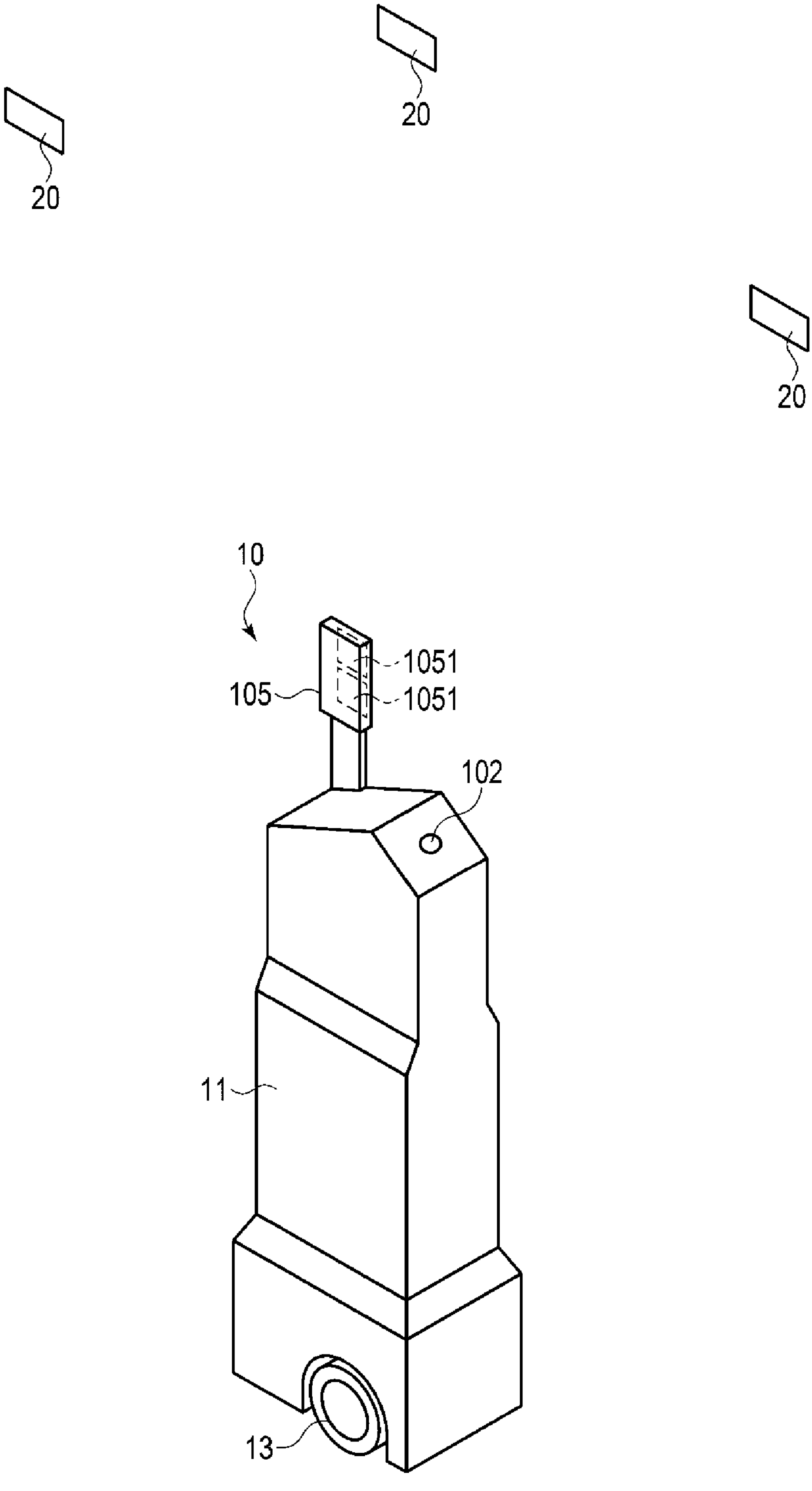

*FIG. 2*

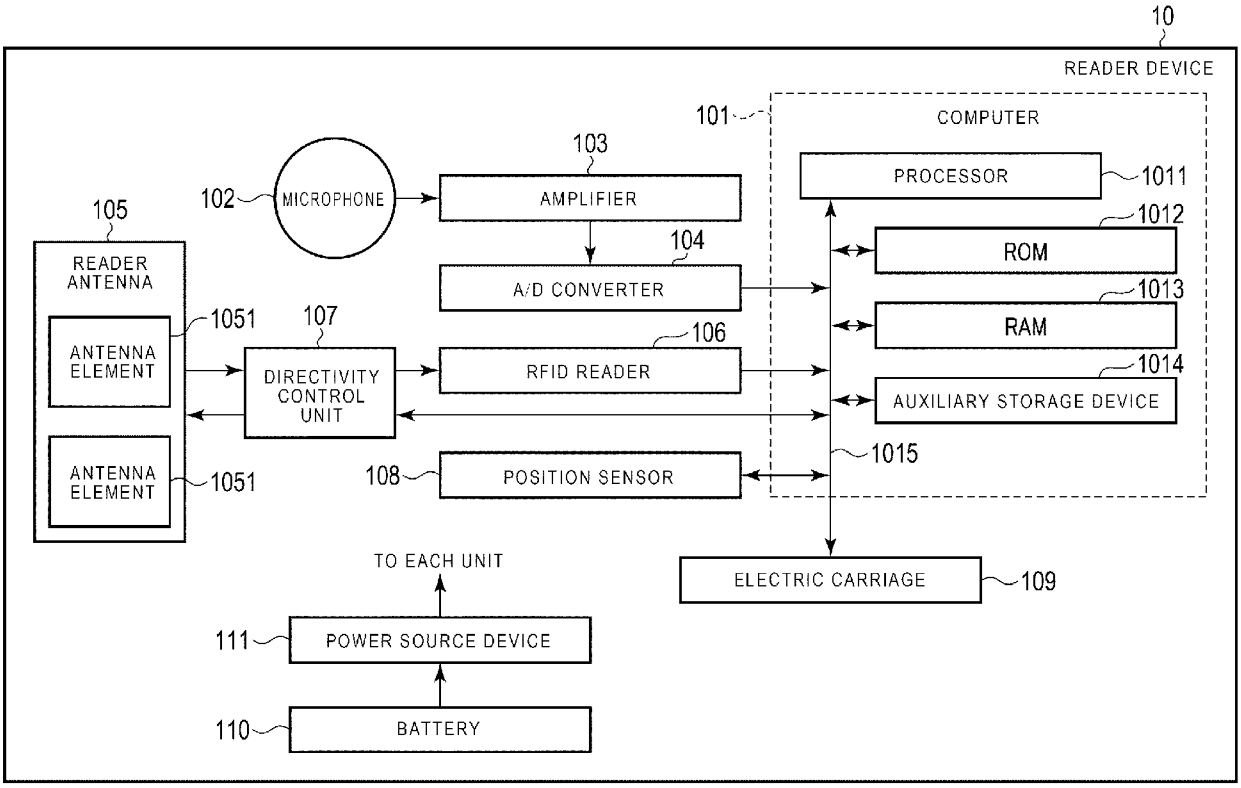
10
READER DEVICE
101
COMPUTER
103
PROCESSOR
1011
1012
ROM
105
102
MICROPHONE
AMPLIFIER
104
READER ANTENNA
A/D CONVERTER
1013
RAM
1051
107
106
ANTENNA ELEMENT
DIRECTIVITY CONTROL UNIT
RFID READER
1014
AUXILIARY STORAGE DEVICE
1015
ANTENNA ELEMENT
1051
108
POSITION SENSOR
TO EACH UNIT
ELECTRIC CARRIAGE
109
111
POWER SOURCE DEVICE
110
BATTERY

FIG. 3

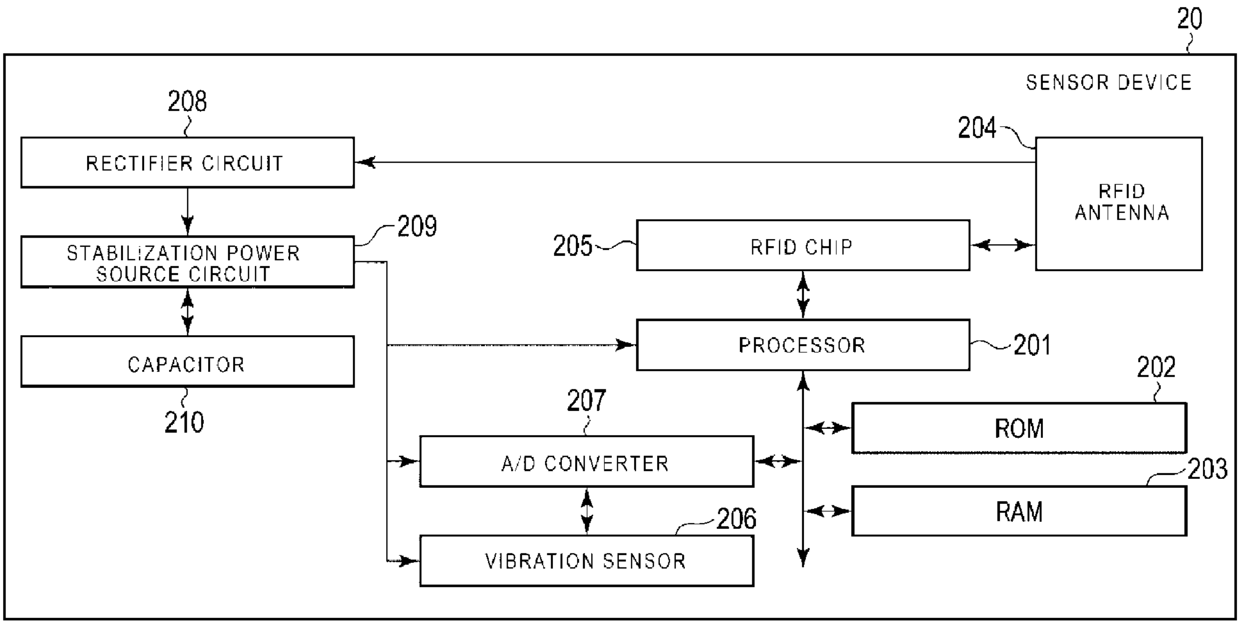
20
SENSOR DEVICE
208
RECTIFIER CIRCUIT
204
RFID ANTENNA
209
STABILIZATION POWER SOURCE CIRCUIT
205
RFID CHIP
CAPACITOR
PROCESSOR
201
210
202
207
ROM
A/D CONVERTER
203
RAM
206
VIBRATION SENSOR

*FIG. 4*

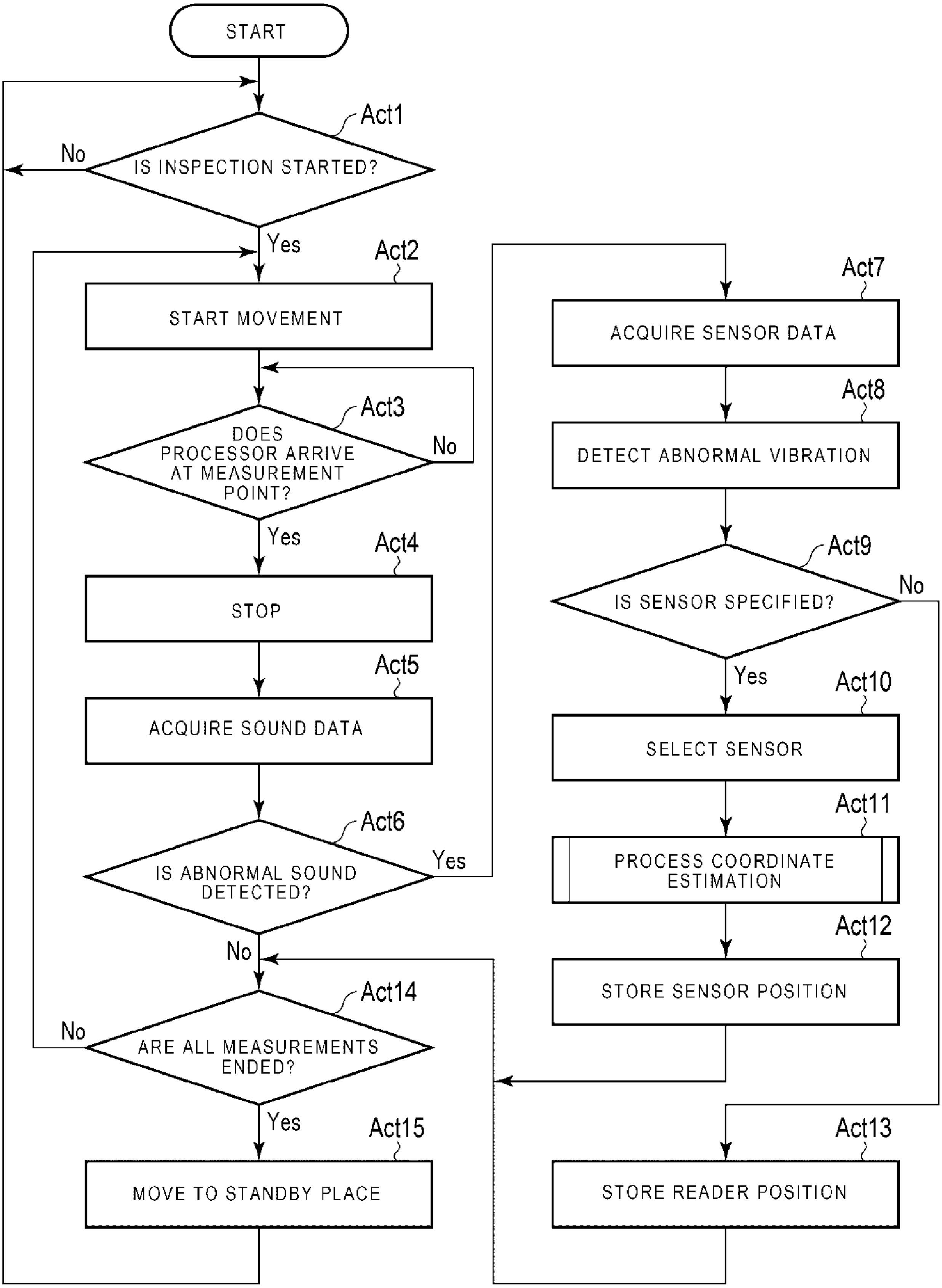
START
Act1
IS INSPECTION STARTED?
No
Yes
Act2
START MOVEMENT
Act3
DOES PROCESSOR ARRIVE AT MEASUREMENT POINT?
No
Yes
Act4
STOP
Act5
ACQUIRE SOUND DATA
Act6
IS ABNORMAL SOUND DETECTED?
Yes
No
Act14
ARE ALL MEASUREMENTS ENDED?
No
Yes
Act15
MOVE TO STANDBY PLACE
Act7
ACQUIRE SENSOR DATA
Act8
DETECT ABNORMAL VIBRATION
Act9
IS SENSOR SPECIFIED?
No
Yes
Act10
SELECT SENSOR
Act11
PROCESS COORDINATE ESTIMATION
Act12
STORE SENSOR POSITION
Act13
STORE READER POSITION

FIG. 5

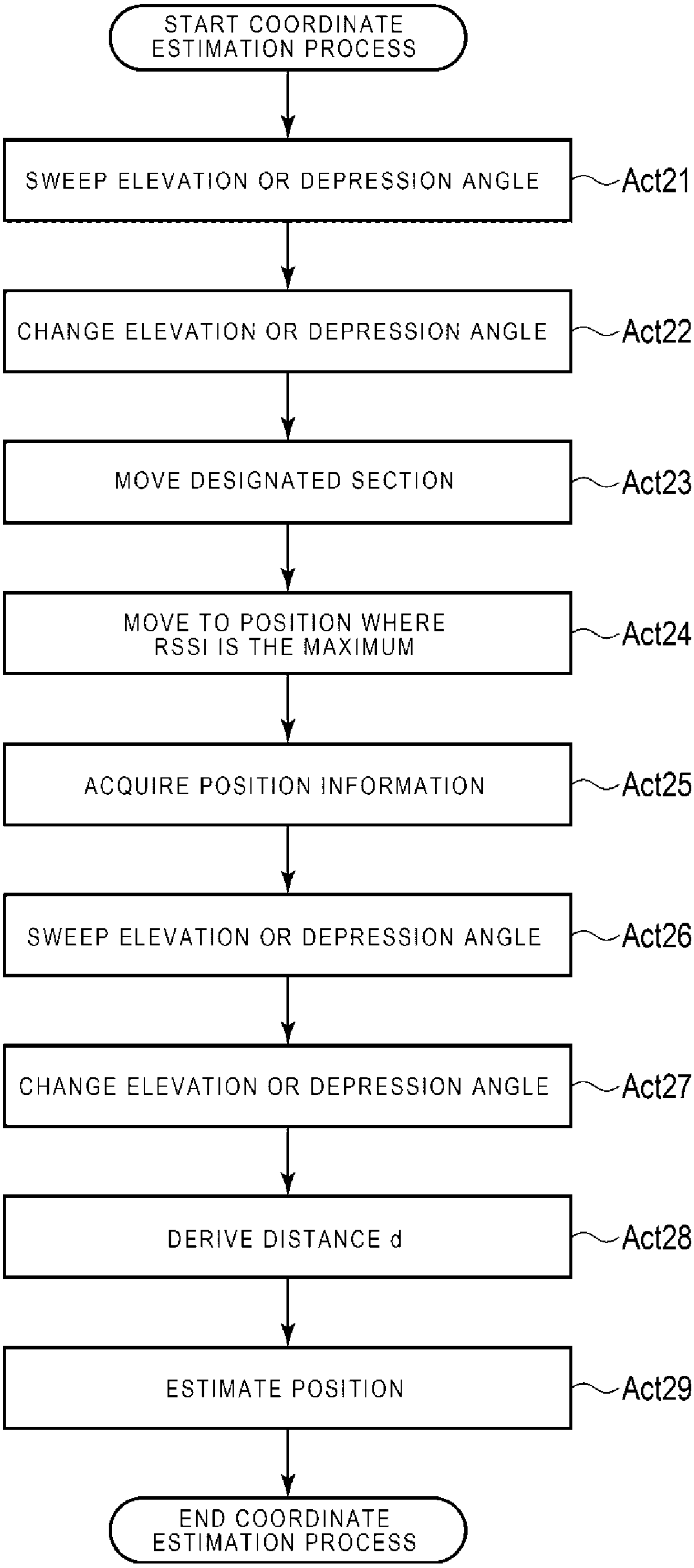
START COORDINATE ESTIMATION PROCESS
SWEEP ELEVATION OR DEPRESSION ANGLE
Act21
CHANGE ELEVATION OR DEPRESSION ANGLE
Act22
MOVE DESIGNATED SECTION
Act23
MOVE TO POSITION WHERE RSSI IS THE MAXIMUM
Act24
ACQUIRE POSITION INFORMATION
Act25
SWEEP ELEVATION OR DEPRESSION ANGLE
Act26
CHANGE ELEVATION OR DEPRESSION ANGLE
Act27
DERIVE DISTANCE d
Act28
ESTIMATE POSITION
Act29
END COORDINATE ESTIMATION PROCESS

FIG. 6

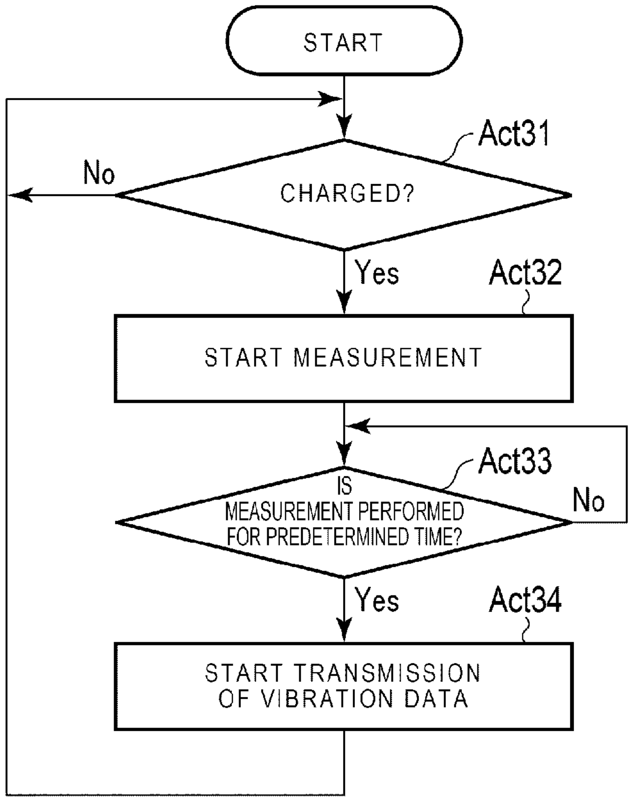
START
Act31
No
CHARGED?
Yes
Act32
START MEASUREMENT
Act33
IS
MEASUREMENT PERFORMED
FOR PREDETERMINED TIME?
No
Yes
Act34
START TRANSMISSION
OF VIBRATION DATA

FIG. 7

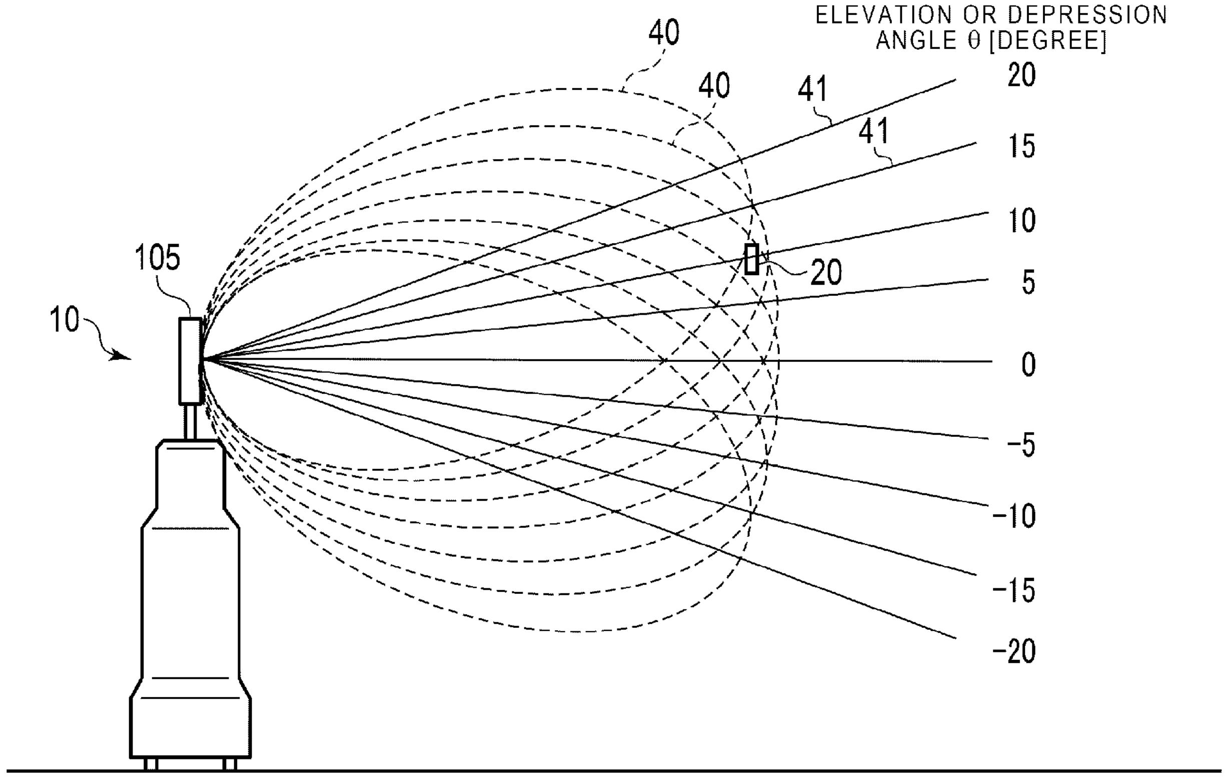
ELEVATION OR DEPRESSION
ANGLE θ [DEGREE]
40
40
41
41
20
15
10
5
0
-5
-10
-15
-20
105
10
20

FIG. 8

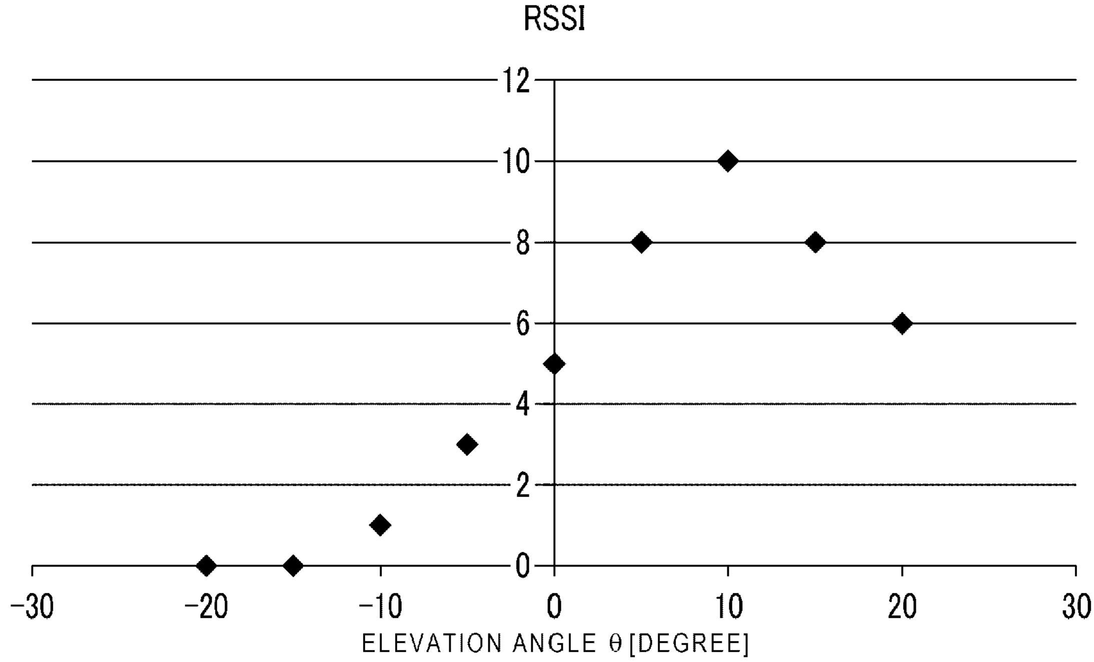
RSSI
12
10
8
6
4
2
0
-30
-20
-10
0
10
20
30
ELEVATION ANGLE θ [DEGREE]

FIG. 9

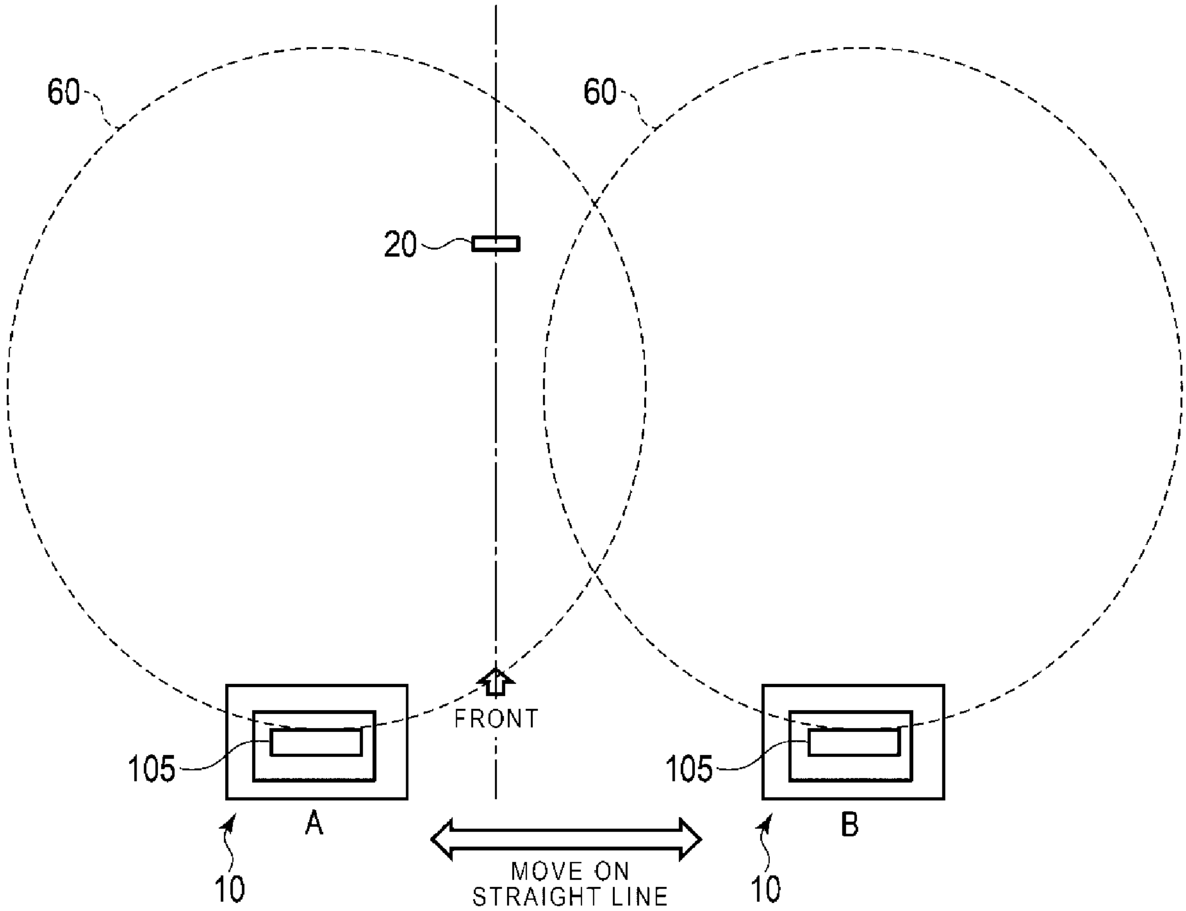
60
60
20
FRONT
105
105
A
B
10
10
MOVE ON
STRAIGHT LINE

FIG. 10

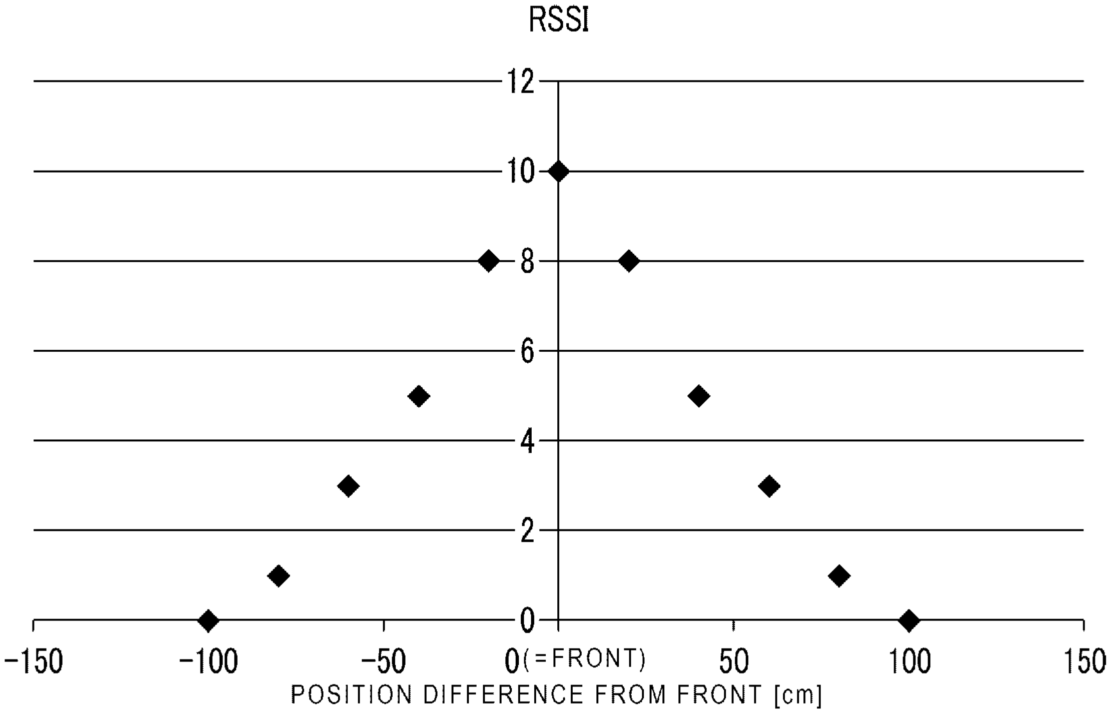
RSSI
12
10
8
6
4
2
0
-150
-100
-50
0(=FRONT)
50
100
150
POSITION DIFFERENCE FROM FRONT [cm]

*FIG. 11*

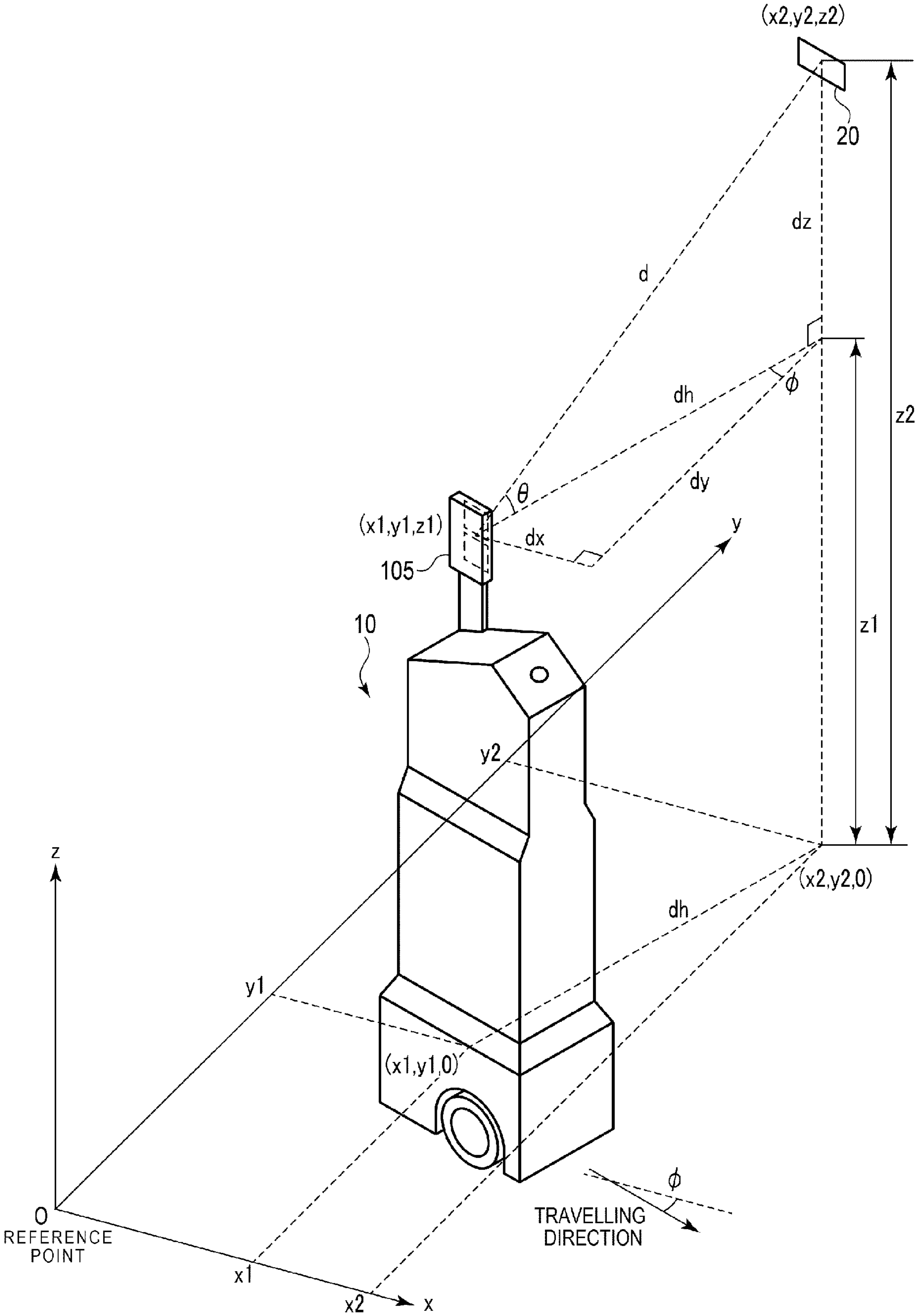
(x2,y2,z2)
20
dz
d
dh
φ
z2
dy
θ
y
(x1,y1,z1)
dx
105
10
z1
y2
z
(x2,y2,0)
dh
y1
(x1,y1,0)
φ
O
REFERENCE
POINT
TRAVELLING
DIRECTION
x1
x2
x

FIG. 12

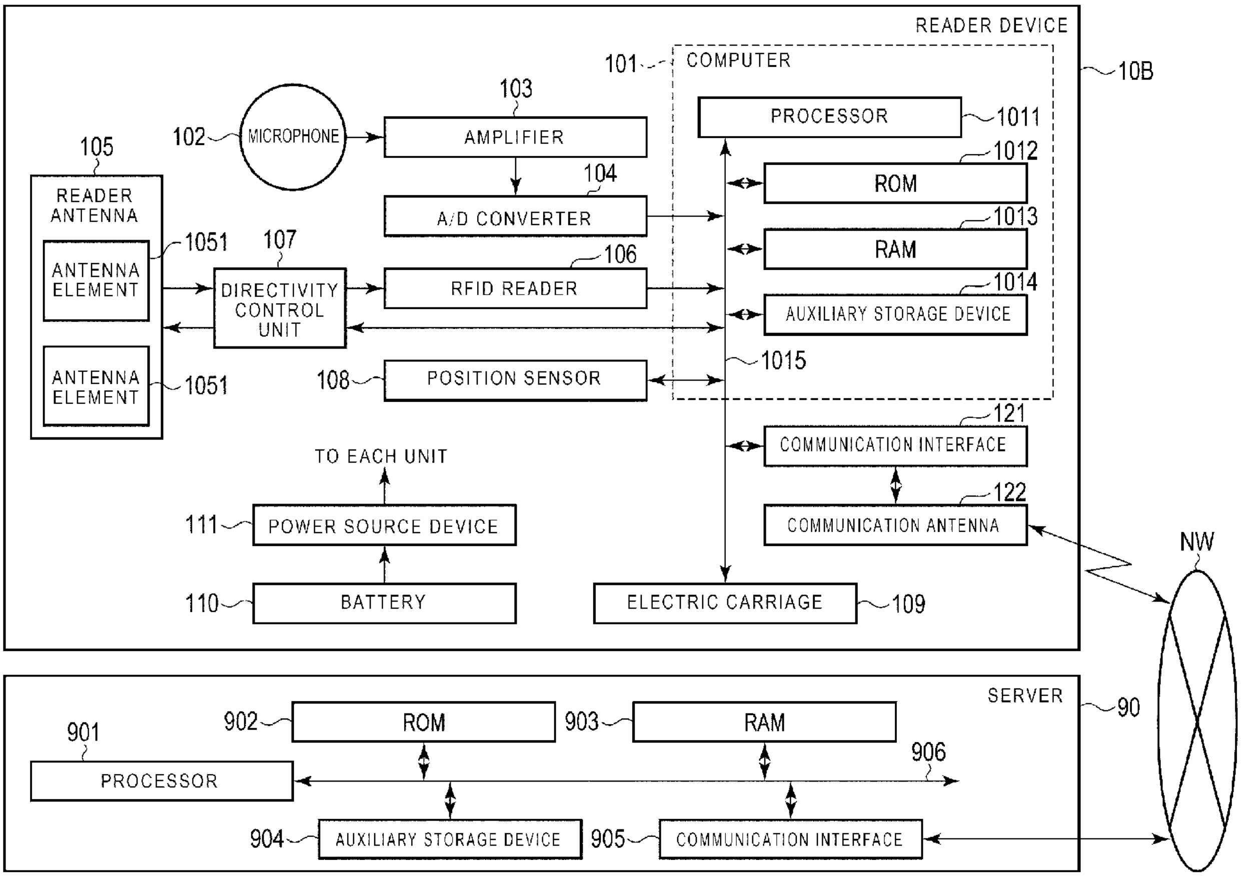
READER DEVICE
10B
101
COMPUTER
PROCESSOR
1011
ROM
1012
RAM
1013
AUXILIARY STORAGE DEVICE
1014
1015
103
AMPLIFIER
102
MICROPHONE
104
A/D CONVERTER
105
READER ANTENNA
ANTENNA ELEMENT
1051
107
DIRECTIVITY CONTROL UNIT
106
RFID READER
ANTENNA ELEMENT
1051
108
POSITION SENSOR
121
COMMUNICATION INTERFACE
122
COMMUNICATION ANTENNA
TO EACH UNIT
111
POWER SOURCE DEVICE
110
BATTERY
ELECTRIC CARRIAGE
109
NW
SERVER
90
901
PROCESSOR
902
ROM
903
RAM
906
904
AUXILIARY STORAGE DEVICE
905
COMMUNICATION INTERFACE

FIG. 13

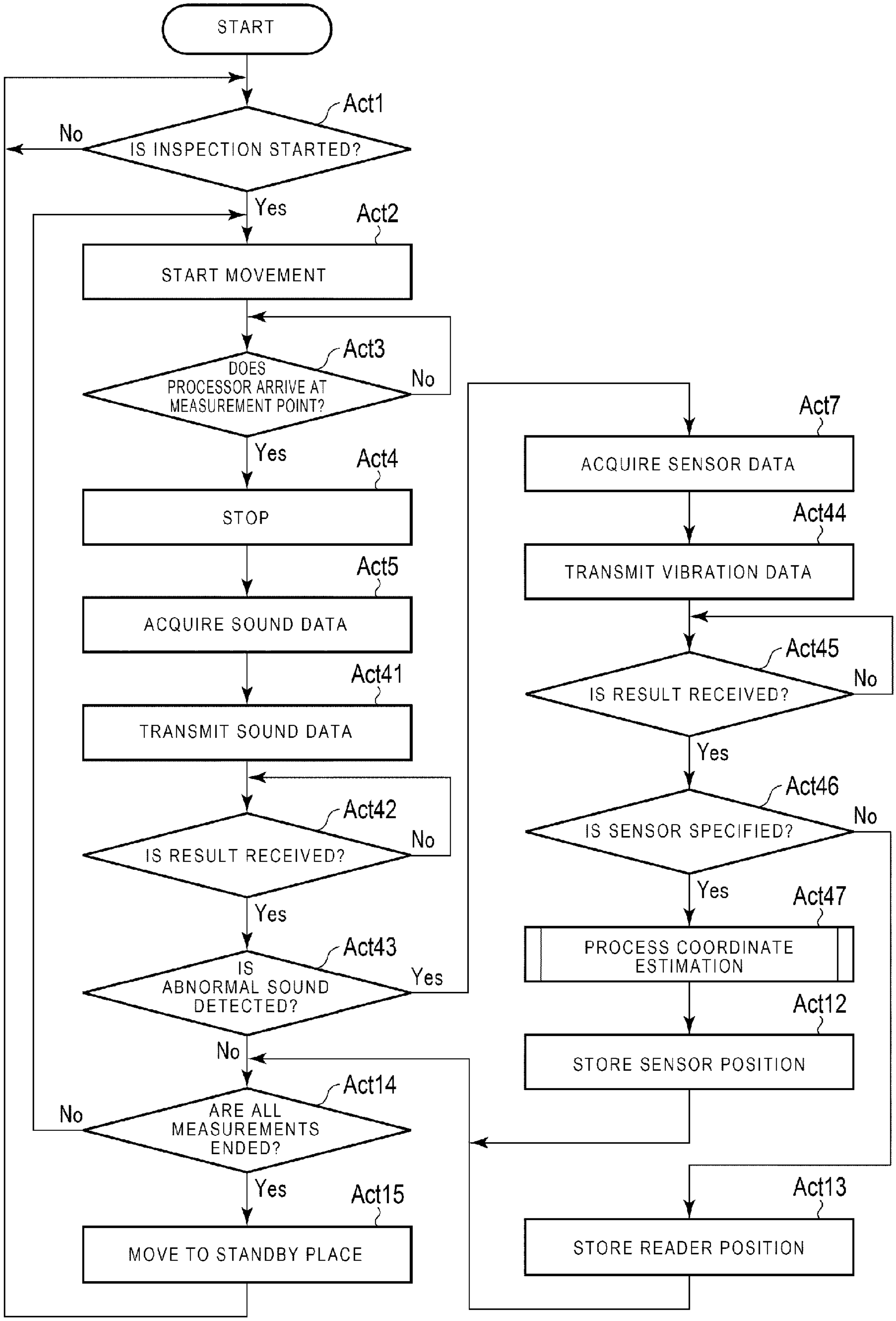
START
Act1
IS INSPECTION STARTED?
No
Yes
Act2
START MOVEMENT
Act3
DOES PROCESSOR ARRIVE AT MEASUREMENT POINT?
No
Yes
Act4
STOP
Act5
ACQUIRE SOUND DATA
Act41
TRANSMIT SOUND DATA
Act42
IS RESULT RECEIVED?
No
Yes
Act43
IS ABNORMAL SOUND DETECTED?
Yes
No
Act14
ARE ALL MEASUREMENTS ENDED?
No
Yes
Act15
MOVE TO STANDBY PLACE
Act7
ACQUIRE SENSOR DATA
Act44
TRANSMIT VIBRATION DATA
Act45
IS RESULT RECEIVED?
No
Yes
Act46
IS SENSOR SPECIFIED?
No
Yes
Act47
PROCESS COORDINATE ESTIMATION
Act12
STORE SENSOR POSITION
Act13
STORE READER POSITION

FIG. 14

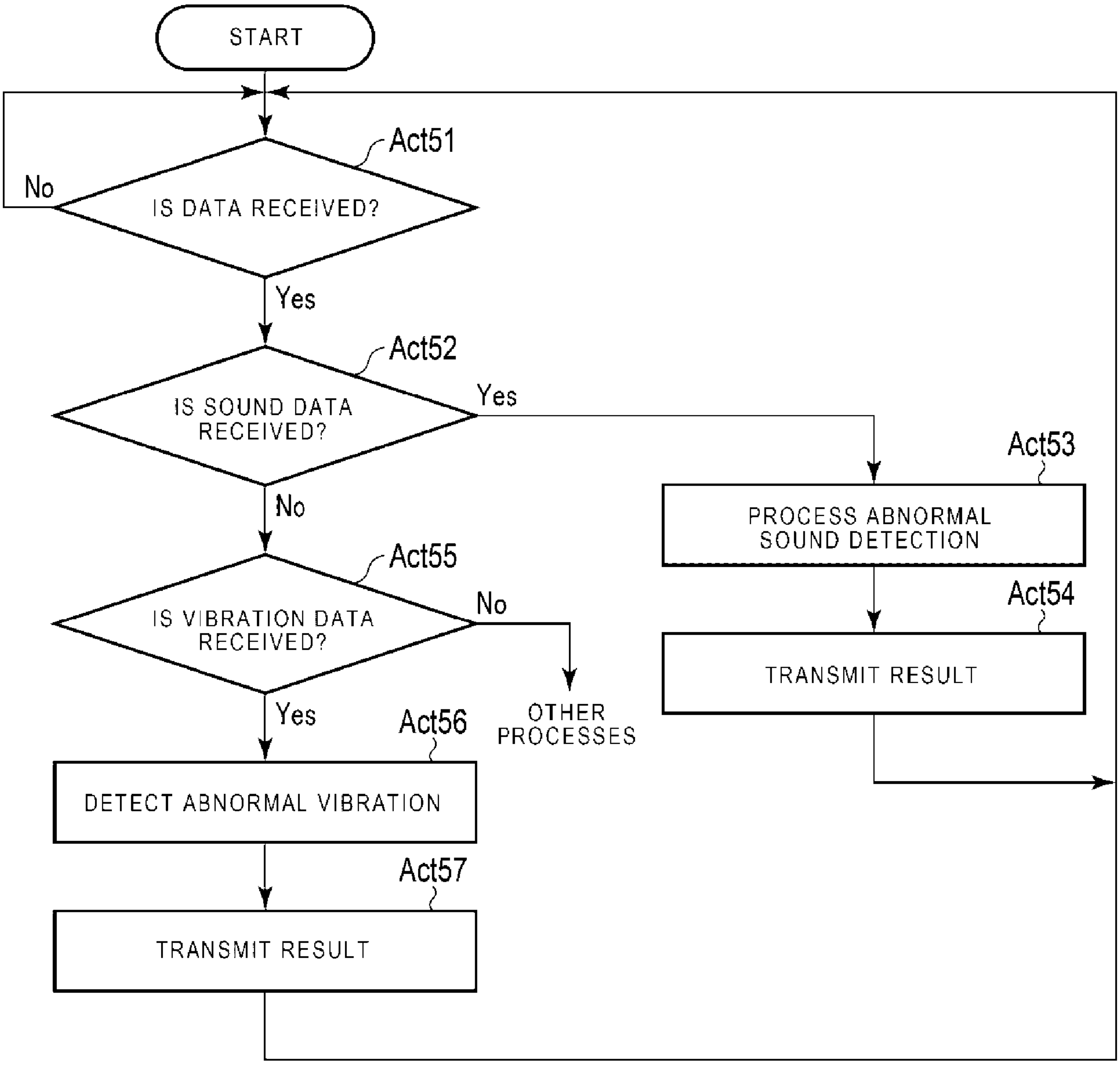
START
Act51
IS DATA RECEIVED?
No
Yes
Act52
IS SOUND DATA RECEIVED?
Yes
No
Act53
PROCESS ABNORMAL SOUND DETECTION
Act54
TRANSMIT RESULT
Act55
IS VIBRATION DATA RECEIVED?
No
OTHER PROCESSES
Yes
Act56
DETECT ABNORMAL VIBRATION
Act57
TRANSMIT RESULT

Europäisches Patentamt
European Patent Office
Office européen des brevets

# EUROPEAN SEARCH REPORT

Application Number
EP 18 17 2878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 1 816 452 A1 (JTEKT CORP [JP]; ZHANG ZHONG [JP]) 8 August 2007 (2007-08-08)<br>* figures 1-5 *<br>* paragraphs [0001] - [0010], [0021] - [0030], [0036] - [0038], [0041] * | 1,4,5<br>2,3 | INV.<br>G01H1/00<br>G01H3/00<br><br>ADD.<br>G01H3/12 |
| X<br><br><br>Y | JP 2012 215412 A (JTEKT CORP; UNIV TOYOHASHI TECHNOLOGY)<br>8 November 2012 (2012-11-08)<br>* figures 1-3 *<br>* paragraphs [0008] - [0010], [0019] - [0026], [0039], [0040], [0061] - [0063], [0067] * | 1,2,4,5<br><br><br>3 | |
| X<br>Y<br>A | EP 1 087 214 A2 (FORD GLOBAL TECH INC [US]) 28 March 2001 (2001-03-28)<br>* figures 1-3 *<br>* paragraphs [0006], [0010] - [0016] * | 1,4,5<br>3<br>2 | |
| X<br>Y<br>A | US 5 457 995 A (STATON RAYMON R [US] ET AL) 17 October 1995 (1995-10-17)<br>* figure 1 *<br>* column 2, line 55 - column 3, line 7 *<br>* column 4, line 30 - column 5, line 23 *<br>* column 5, line 66 - column 6, line 19 *<br>* column 6, line 46 - line 62 * | 1,4,5<br>3<br>2 | TECHNICAL FIELDS SEARCHED (IPC)<br>G01H |
| X<br>Y | JP 2005 315595 A (NISSAN MOTOR)<br>10 November 2005 (2005-11-10)<br>* figures 1-3 *<br>* paragraphs [0006], [0007], [0011] - [0019], [0024], [0040] - [0042] * | 1,4,5<br><br>2,3 | |
| X<br>Y | JP S61 175528 A (KAJIMA CORP)<br>7 August 1986 (1986-08-07)<br>* figures 1-3 *<br>* page 177 - page 179 * | 1,3-5<br><br>2 | |

The present search report has been drawn up for all claims

1

| Place of search | Date of completion of the search | Examiner |
|---|---|---|
| The Hague | 19 October 2018 | Sartoni, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 18 17 2878

This annex lists the patent family members relating to the patent documents cited in the above-mentioned European search report. The members are as contained in the European Patent Office EDP file on
The European Patent Office is in no way liable for these particulars which are merely given for the purpose of information.

19-10-2018

| Patent document cited in search report | Publication date | Patent family member(s) | Publication date |
|---|---|---|---|
| EP 1816452 A1 | 08-08-2007 | EP 1816452 A1<br>JP 4942353 B2<br>JP 2007205886 A<br>US 2007201704 A1 | 08-08-2007<br>30-05-2012<br>16-08-2007<br>30-08-2007 |
| JP 2012215412 A | 08-11-2012 | JP 5804409 B2<br>JP 2012215412 A | 04-11-2015<br>08-11-2012 |
| EP 1087214 A2 | 28-03-2001 | EP 1087214 A2<br>JP 2001147153 A<br>US 6650757 B1 | 28-03-2001<br>29-05-2001<br>18-11-2003 |
| US 5457995 A | 17-10-1995 | NONE | |
| JP 2005315595 A | 10-11-2005 | JP 4265474 B2<br>JP 2005315595 A | 20-05-2009<br>10-11-2005 |
| JP S61175528 A | 07-08-1986 | JP H0342778 B2<br>JP S61175528 A | 28-06-1991<br>07-08-1986 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017101111 A